# EUROPEAN PATENT SPECIFICATION

(11) **EP 2 482 423 B1**
(45) Date of publication and mention of the grant of the patent: **22.05.2013**
(21) Application number: 11182026.2
(22) Date of filing: 20.09.2011
(51) Int. Cl.: H02J 7/04

(54) **Power pack partial failure detection and remedial charging control**
Teilweise Fehlererkennung eines Strompakets und Hilfsladungssteuerung
Détection de défaillance partielle de bloc d'alimentation et contrôle de chargement de correction

(30) Priority: 27.01.2011 US 436838 P
(43) Date of publication of application: 01.08.2012
(60) Divisional application: 13160638.6
(73) Proprietor: Research In Motion Limited, Waterloo, ON N2L 3W8 (CA)
(72) Inventor: Patino, Joseph, Sunrise, FL 33323 (US); Geris, Ryan Alexander, Sunrise, FL 33323 (US); Brubacher, Jonathan Quinn, Waterloo, Ontario N2L 5R9 (CA); Wu, Chee-Ming Jimmy, Waterloo, Ontario N2L 3W8 (CA)
(74) Representative: Bryn-Jacobsen, Caelia

(56) References cited:
- WO-A2-2005/117232
- US-A- 4 388 582
- US-A- 5 894 212
- US-A1- 2006 076 923
- US-B1- 6 268 710
- US-B1- 6 304 059

## Description

### FIELD OF THE DISCLOSURE

The present disclosure generally relates to power pack charging circuits and related processing and more particularly to determining a partial failure of a power pack.

**BACKGROUND**

Electronic devices, such as portable electronic devices, include power packs such as batteries to provide operating power to the device. Devices with power packs also accept power from external supplies to power the electronic device as well as to charge the power pack. Charging controllers are configured to provide a suitable charging current to battery packs based upon the rated capacity of the power pack. The maximum charging current that a particular power pack can safely or effectively accept is based upon the rated capacity of the power pack. Providing a power pack with a charging current greater than its maximum charging current can cause the power pack to over heat and become damaged. Many product designs limit charging current for their power packs. One example of a specification of charging limits is IEEE 1725.

The present invention is set out in the independent claims, with some optional features set out in the claims dependent thereto.

**BRIEF DESCRIPTION OF THE DRAWINGS**

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 illustrates a power pack charging configuration according to one example;

FIG. 2 illustrates an alternative power pack charging configuration according to one example;

FIG. 3 illustrates a fixed time failed component power pack determination process, in accordance with one example;

FIG. 4 illustrates a fixed capacity change component power pack failure determination process, in accordance with one example;

FIG. 5 illustrates a fixed time fixed voltage failed component power pack determination process, in accordance with one example;

FIG. 6 illustrates a constant voltage fixed capacity change component power pack failure determination process, in accordance with one example;

FIG. 7 illustrates a Coulomb counting failed component power pack determination process, in accordance with one example;

FIG. 8 illustrates a voltage measuring fixed time failed component power pack determination process, in accordance with one example;

FIG. 9 illustrates a voltage measuring fixed voltage change component power pack failure determination process, in accordance with one example;

FIG. 10 is an example handheld communications device charging configuration according to one example; and

FIG. 11 is a block diagram of an electronic device and associated components in which the systems and methods disclosed herein may be implemented.

### DETAILED DESCRIPTION

Some devices use rechargeable power packs that include two or more component power packs. For example, a rechargeable power pack could be made of two separate power packs, such as two batteries, that are wired in parallel. In this configuration, the charging current provided to the power pack is normally split between the two component batteries such that each battery receives half of the charging current that is provided to the rechargeable power pack. In a case of a failure of one battery where that battery becomes open circuited, however, all of the charging current is passed through the remaining operational battery. This may result in an over-current charging situation for the remaining operational battery and cause damage to the battery or the electronic device. Further, the remaining battery only has half of the specified capacity of the fully functional power pack, thereby limiting the operating time of the electronic device powered by that power pack. A rechargeable power pack with multiple component power packs does not generally provide an indication that one of the component power packs has failed and therefore the rechargeable power pack has significantly reduced rated capacity that requires a reduced charging current and will provide less operating time for the electronic device.

The concepts described herein, in addition to other potential benefits, support the capability of power packs with multiple component power packs to determine the partial failure of one of the component power packs. Further, the concepts described herein support techniques that may be implemented automatically in response to such a failure.

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically. The term "configured to" describes hardware, software or a combination of hardware and software that is adapted to, set up, arranged, built, composed, constructed, designed or that has any combination of these characteristics to carry out a given function. The term "adapted to" describes hardware, software or a combination of hardware and software that is capable of, able to accommodate, to make, or that is suitable to carry out a given function.

In the following discussion, power pack capacity refers to a present energy capacity of a power pack, such as a battery. For example, power pack capacity may refer to a number of Amp-Hours remaining within a battery or a percentage of the battery's total designed capacity when fully charged. Power pack capacity as used below generally refers to a charge level of a battery or a comparable measure of any suitable power pack. As used below, the rated capacity of a power pack is the total useable energy that a power pack is able to store in a new condition.

Described below are systems and methods that determine a failure of a component power pack within a rechargeable power pack that contains multiple component power packs. In a device with a rechargeable power pack that has two component power packs, a determination is made that one or both of the component power packs are present by monitoring one or more of the unloaded voltage, the loaded voltage, the present delivered charging current level for a fixed charging voltage, the charge and discharge time, the impedance, or any combination of these values for the rechargeable power pack. In the event that one component power pack is determined to have failed because it became open-circuited, the described systems and methods are able to take a corrective action such as reducing the charging current to a level consistent with the reduced rated capacity of the rechargeable power pack. Another corrective action is able to include halting the charging of the rechargeable power pack all together. The described systems and methods are also able to give a user an indication that one component power pack has failed. In one example, the described systems and methods are able to adjust charging currents into a rechargeable power pack to an appropriate level to accommodate the failed component power pack and thereby conform to power pack charging over-current restrictions, such as are defined by the IEEE 1725 or IEEE 1625 standard. These standards are established by the IEEE, Piscataway, NY, USA.

In one example, the described systems and methods measure an amount of time that it takes for a rechargeable power pack to reach a specified voltage rise while being charged or a specified voltage decrease while being discharged. A determination is made if both or only one component power pack is present based on the measured time duration to reach this specified voltage rise or decrease. If only one component power pack is operational, the time duration to reach the specified voltage rise or decrease will be much shorter since the one operational component power pack of the two component rechargeable power pack receives twice charging current that would be delivered if the other component power pack, which is wired in a substantially parallel configuration with the operational component power pack, were operational. These measurements can be made while the power pack is discharging, while the power pack is charging, or under both of these conditions.

Alternately, the systems and methods measure the amount of voltage rise or decrease for the rechargeable pack during a specified time duration while the rechargeable power pack is being charged or discharged. Based on this voltage rise or decrease measurement for a fixed time that corresponds to the specified time duration, a determination can be made if both or only one component power pack is present. If only one component power pack is present, the voltage rise or decrease is much greater during the specified charging time duration since the one operational power pack receives twice the normal charging current or provides all of the supplied output current while being discharged. These measurements can be made while the power pack is discharging, while the power pack is charging, or under both of these conditions. The specified time duration is able to be a configured value that is programmed into a power pack controller or the specified time duration is able to be defined through any technique that is operable with stored or determined estimated power pack charging times.

In another example, a Coulomb counting "fuel gauge" circuit is used to determine the amount of energy, or "capacity," that is being put in to the power pack. With one failed component power pack in a rechargeable power pack with two component power packs, only half the normal charge capacity that would be required by a fully operational rechargeable power pack will be put into the one operational component power pack over a normal charge cycle. This is an indication that only one cell is present. These measurements can be made while the power pack is discharging, while the power pack is charging, or under both of these conditions.

In another example, the described systems and methods sense the rechargeable power pack impedance via the fuel gauge or by other measurement techniques using power pack voltage and current measurement equipment. To make a determination based on rechargeable power pack impedance, this measured impedance value is compensated for the temperature of the rechargeable power pack and for its cycle life degradation. Cycle life degradation reflects the reduced rated capacity of a rechargeable power back as the number of charging and discharging cycles experienced by the rechargeable power pack increases. Based on that adjusted impedance value, a determination can be made if both or only one of the component power packs within a two component rechargeable power pack is present. If both component power packs are present, the impedance is roughly half of the impedance of only one operational component power pack. The accuracy of this approach is improved by more accurate characterization of rechargeable power pack impedance over a range of temperatures and time within the cycle life of the power pack's charging and discharging cycles.

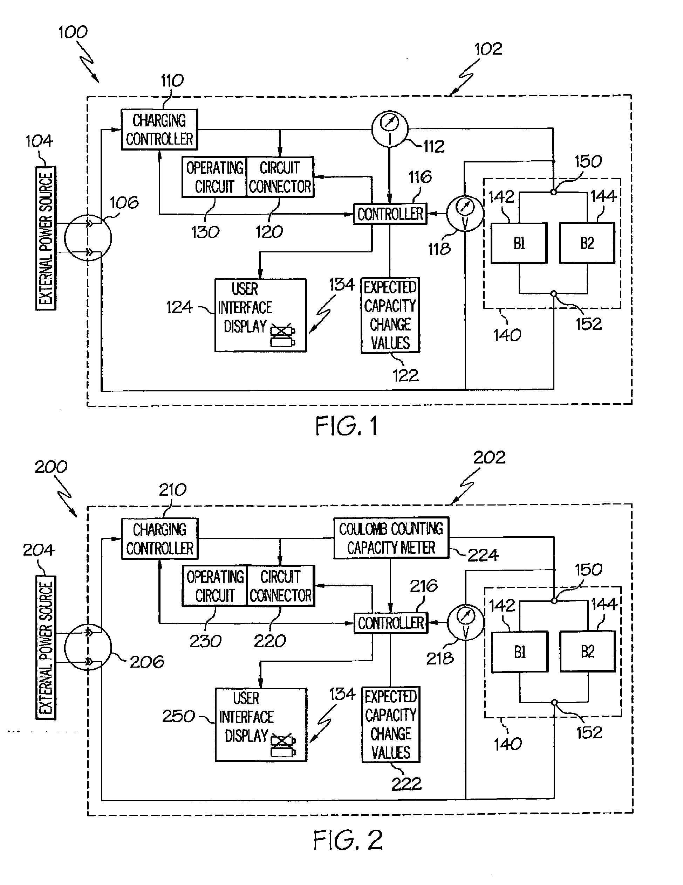

FIG. 1 illustrates a power pack charging configuration 100 according to one example. The power pack charging configuration 100 illustrates a rechargeable power source 102 that accepts electrical power in the form of a charging current from an external power source 104 and controls the charging of a rechargeable power pack 140. The rechargeable power source 102 in one example is incorporated into an electronic device. In other examples, the rechargeable power source 102 is able to be a stand-alone device that has internal power packs or a stand alone device that operates with external power packs.

The rechargeable power pack 140 of one example includes a pair of separate component power packs, illustrated as a first power pack 142 and a second power pack 144. Each of the component power packs in one example is a rechargeable battery, such as one or more Lithium-ion batteries, lithium polymer batteries, and the like. Further examples are able to include any type of power pack. In various examples, the rechargeable power pack 140 is able to include component power packs that have significantly different rated capacities, different compositions, designs, or combinations of those characteristics. In one alternative, the rechargeable power pack 140 is able to include a battery and a super-capacitor that are connected substantially in parallel. The rechargeable power pack 140 accepts the charging current and stores energy obtained through the charging current. The stored energy is later provided to electrical devices to support their operation.

The component power packs in this example, i.e., the first power pack 142 and the second power pack 144, are rechargeable batteries that are electrically connected in a substantially parallel configuration. Further examples are able to use rechargeable power packs that include component power packs that have any composition or structure that produces electrical energy for an external electrical device and that accepts and stores a charging current.

Although the first power pack 142 and the second power pack 144 are depicted as being wired in a parallel configuration, rechargeable power packs 140 are able to have component power packs that are electrically connected in a substantially parallel configuration. Components may be in a substantially parallel configuration if they behave substantially as if they were strictly in parallel. In some cases where two components are substantially in parallel, if one of the components fails and becomes nonconductive, all or nearly all of the current that would have passed through the failed component may be directed to the component that did not fail. In one example of a substantially parallel configuration, each component power pack has a positive terminal that is electrically coupled to a positive power pack terminal 150 and a negative terminal of each component power pack is electrically coupled to a negative power pack terminal 152. The one or both of the couplings between the component power pack terminals and the respective power pack terminal are able to be either direct couplings or indirect couplings. An indirect connection is able to include, as an example, a connection that include resistive components, reactive components, active components, or combinations of two or more of these types of components.

Further examples are able to incorporate rechargeable power packs that have any number of component power packs. For example, an alternative rechargeable power pack is able to include three or more batteries that are wired in a substantially parallel configuration. Further alternative power packs are able to include any number of component power packs that are wired in any configuration to provide electrical energy and accept charging current. For example, the component power packs are also able to consist of two or more power packs that are configured in a substantially serial arrangement. Components may be in a substantially series configuration if they behave substantially as if they were strictly in series, with all or nearly all of the current that passes through one component passing through the other. In a substantially serial arrangement, the power packs are able to also have other components coupled in series, such as resistive components, reactive components, active components, or combinations of two or more of these types of components.

The rechargeable power source 102 connects to an external power source 104 through an external power connector 106. In alternative examples, the rechargeable power source 102 is wirelessly coupled to the external power source 104. The external power source 104 provides electrical voltage and current to a charging controller 110. The charging controller 110 in one example is a power pack charging controller that provides intelligent charging of the rechargeable power pack 140, as is described below.

The rechargeable power source 102 includes an operating electrical circuit connector 120 that connects the rechargeable power source 102 to an operating electrical circuit 130. The operating electrical circuit 130 receives electrical power through the rechargeable power source 102 that originates either in the external power source 104 or the rechargeable power pack 140. In one example, the operating electrical circuit 130 is included in a device that also contains the rechargeable power source 102. In further examples, the operating electrical circuit 130 is separated from the rechargeable power source 102 and the two are electrically connected through the electrical operating circuit connector 120.

The charging controller 110 in one example provides charging current to the rechargeable power pack 140 by including a processor that controls charging circuits also within the charging controller 110 to alter charging voltages or currents according to one or more charging profiles. A charging profile defines levels, based on one or more criteria, of electrical voltages and charging current that are provided to the rechargeable power pack 140. For example, the charging controller 110 of one example uses a charging profile that adjusts the charging current and voltage applied to the rechargeable power pack 140 based upon the loaded or unloaded voltages measured of the rechargeable power pack 140. The unloaded voltage of the rechargeable power pack 140 is the voltage produced by the rechargeable power pack 140 when it is not being provided with charging current or when the rechargeable power pack 140 is not connected to an electrical load. Alternatively, charging profiles may adjust the charging current or voltage based upon measured loaded voltages of the rechargeable power pack 140. The loaded voltage of the rechargeable power pack 140 is the voltage present on the output terminals of the rechargeable power pack 140 when there is a current flowing through the rechargeable power pack 140. The current flowing through the rechargeable power pack 140 is able to be an input charging current or an output current provided to circuits being powered by the rechargeable power pack. This current flowing through the rechargeable power pack 140 encounters an internal impedance of the rechargeable power pack 140 and therefore causes a voltage increase, in the case of an input charging current, or a voltage decrease, in the case of an output discharge current, over the unloaded voltage of the rechargeable power pack 140.

In one example, the charging controller 110 uses a charging profile that specifies providing a constant or determined charging current value to the rechargeable power pack 140 when one of the loaded or unloaded voltage of the rechargeable power pack 140 is below a threshold. The charging controller 110 includes a controllable charging current source that provides a configurable charging current level that is configured, in one example, by a processor within the charging controller 110 setting a determined current level that the controllable charging current source is to output. That charging profile further specifies providing a constant or determined voltage to the rechargeable power pack 140 when one of the loaded or unloaded voltage exceeds that threshold. The charging controller 110 includes a controllable charging voltage source that provides a configurable determined voltage that is configured, in one example, by a processor within the charging controller 110. In one example, the processor within the charging controller 110 sets a determined voltage level that the controllable charging voltage source is to output.

When the charging controller 110 provides a constant charging current to the rechargeable power pack 140, the loaded and unloaded voltage of the rechargeable power pack increases as its capacity increases due to accepting the charging current. Once the loaded or unloaded voltage threshold is reached and a constant voltage is provided, the charging current decreases as the capacity of the rechargeable power pack 140 is increased. The loaded and unloaded voltage of the rechargeable power pack 140 also rises while it is charging with a constant voltage.

The rechargeable power source 102 includes a controller 116 that provides commands to the charging controller 110 to halt charging or to modify at least one charging current parameter, such as is defined by the charging profile, to use for the rechargeable power pack 140. As described in detail below, the controller 110 of one example determines if one component power pack, such as either the first power pack 142 or the second power pack 144, within the rechargeable power pack 140 has failed. In response to determining that a component power pack has failed, the controller 110 is able to halt charging of the rechargeable power pack 140, or the controller 110 is able to command the charging controller 110 to modify a charging current parameter, such as by commanding a change in the charging profile it is using, so as to properly charge the remaining operational component power packs.

The rechargeable power source 102 includes an ammeter 112 that is electrically connected substantially in series between the charging controller 110 and the rechargeable power pack 140. The ammeter 112 is also in series between the rechargeable power pack 140 and the electrical operating circuit connector 120. The ammeter 112 is electrically connected to the rechargeable power pack 140 in such a way that it measures the electrical current flowing into the rechargeable power pack 140 and also the electrical current drawn from the rechargeable power pack 140. The ammeter 112 provides values to the controller 116 of measured amounts of electrical current flowing into or out of the rechargeable power pack 140. In one example, the ammeter 112 along with processing performed by controller 116 operates as a power pack capacity monitor to determine a measured capacity change quantity for the rechargeable power pack based upon the measured electrical current flowing into and out of the rechargeable power pack.

The rechargeable power source 102 also includes a voltmeter 118 or other voltage measurement means that is electrically connected substantially in parallel with the rechargeable power pack 140. The voltmeter 118 is used to measure the terminal voltage of the rechargeable power pack 140, which is the voltage present between the positive power pack terminal 150 and the negative power pack terminal 152. In one example, the voltmeter 118 is connected to the positive side of the rechargeable power pack 140 to allow measurement of the voltage of the rechargeable power pack 140 that is present between the positive power pack terminal 150 and the negative power pack terminal 152. In one example, the voltmeter 118 along with processing performed by controller 116 operates as a power pack capacity monitor to determine a measured capacity change quantity for the rechargeable power pack based upon the measured voltages of the rechargeable power pack.

The controller 116 further operates, in one example, alone or in conjunction with other elements of the rechargeable power source 102 as a power pack charging monitor that is configured to determine at least one parameter of a charging current provided to the rechargeable power pack 140. In one example, the at least one parameter of the charging current is a determined current level that is set by the charging controller 110, and the controller 116 receives the value of the charging current level. In another example, the at least one parameter of the charging current is a determined voltage that is set by the charging controller 110, and the controller 116 receives the value of the determined voltage. In a further example, the at least one parameter of the charging current is a net charging current provided to the rechargeable power pack 140 during a time duration, and the controller 116 receives current measurements from ammeter 112 and integrates those over the time duration.

The controller 116 in some examples further operates, in conjunction with other elements of the rechargeable power source 102, as a power pack capacity monitor. In one example, the controller 116 receives and integrates values of charging current delivered to the rechargeable power pack 140 as those values are measured by the ammeter 112. In another example, the controller 116 receives output voltages of the rechargeable power pack 140 as those values are measured by the voltmeter 118. The controller 116 is able to determine a measured capacity change quantity for the rechargeable power pack 140 over a time duration by receiving and processing these charging current or output voltage values. In another example, in addition to determining these measured capacity change quantities, the controller 116 monitors the determined measured capacity changes until a specified change in capacity is reached and determines the amount of time that is used for the determined measured capacity to reach the specified change in capacity.

As an alternative to reading unloaded voltages of the rechargeable power pack 140, the loaded output voltage of the rechargeable power pack 140 is also able to be measured. The loaded voltage of the rechargeable power pack is the voltage present between the positive power pack terminal 150 and the negative power pack terminal 152 when a current if flowing through the rechargeable power pack. The unloaded voltage is able to be determined by subtracting the voltage corresponding to the voltage rise or drop between the unloaded voltage and the loaded voltage that is due to the internal impedance of the rechargeable power pack 140. The voltage rise or drop corresponding to the internal impedance of the rechargeable power pack 140 is determined by multiplying the present current flowing into or out of the rechargeable power pack 140 by the present internal impedance of the rechargeable power pack 140.

The present internal impedance of the rechargeable power pack 140 is able to be determined by various techniques. In one example, these techniques realized through processing performed by controller 116 based upon measurements obtained from one or more of the ammeter 112, voltmeter 118, and data obtained from the charging controller 110. One technique determines the present internal impedance of the rechargeable power pack 140 by measuring the loaded output voltage of the rechargeable power pack 140 at each of two values of current flowing through the power pack. An alternative example measures the current flowing through the power pack that occur at two values of loaded power pack voltages. The power pack currents are able to be either positive or negative values to represent, respectively, current flowing into or out of the power pack. The two power pack voltages at which the current is measured are able to be set by, for example, a fixed charging voltage applied to the power pack. The internal power pack impedance is the difference of those two voltages divided by the difference of those two currents. The determination of the difference between unloaded voltage and loaded voltage of a power pack is described by the following equations:

I₁ is the current into or out of the power pack at V₁

I₂ is the current into or out of the power pack at V₂

Impedance (Z) is equal to (V₂-V₁)/(I₂-I₁)

Unloaded voltage is equal to the difference between the loaded voltage and the product of the present current and internal impedance. The unloaded voltage is represented by the following equation:

V_{unloaded} = V_{loaded} - (I*Z)

The controller 116 accesses stored values of expected capacity change values 122. The stored expected capacity change values 122 include expected capacity change quantities that are able to be determined, for example, by empirical measurements of an example rechargeable power pack 140. The expected capacity change values 122 are able to be stored in, for example, a table encoded within a non-volatile memory device that is accessed by the controller 116. Such a non-volatile memory device is able to be part of the controller 116 or a separate memory device. In one example, the expected capacity change values are able to be stored in a non-volatile memory device that is part of the rechargeable power pack 140. The expected capacity change values 122 are able to be programmed into a non-volatile memory device during a manufacturing process for the rechargeable power source 102 or rechargeable power pack 140, at various times during the operation or maintenance of the rechargeable power source 102, or at any time.

In one example, the expected capacity change values 122 is a non-volatile storage device that stores one or more of the following data in tabular form:

1) Expected change in terminal voltage over a time period of a specified charging current;

2) Expected change in terminal voltage over a time period of a specified charging voltage;

3) Expected time duration for a specified change in terminal voltage with a specified charging current; and

4) Expected time duration for a specified change in charging current with a specified charging voltage.

The values for changes of the above quantities are able to be dependent upon the initial loaded or unloaded voltage of the rechargeable power pack 140 at the time that monitoring of change starts. Because of the multiple quantities that are stored, and the multiple sets of data that define the quantities based upon an initial loaded or unloaded voltage, the expected capacity change values 122 are able to be a multivariate array of data.

The specified charging voltage or the specified charging current upon which the above quantities are based are able to be one or more of fixed charging voltage levels, fixed charging current levels, variable charging voltage levels that have a known mean value, or variable charging current levels that have a known mean value. Further, the expected terminal voltages are able to be either loaded output voltages or unloaded terminal voltages.

As described in further detail below, the controller 116 receives measured capacity change quantity values, such as loaded or unloaded rechargeable power pack voltages from the voltmeter 118 or other voltage sensing means and charging or discharge current flow values from the ammeter 112 or other current sensing means, and compares those received measured values to corresponding expected capacity change quantity values that are stored in the expected capacity change values 122. If the measured capacity of the rechargeable power pack 140 changes more rapidly than would be expected, a determination is made that one component power pack, such as the first component power pack 142 or the second component power pack 144, within the rechargeable power pack 140 has failed. In response to determining that a component power pack has failed, the controller is able to command the charging controller 110 to modify its charging profile to accommodate the reduced ability of the rechargeable power pack 140 to accept charging current. Additionally, in response to determining that a component power pack has failed, the controller 116 is able to command the operating electrical circuit 130 to change its operating mode. For example, the controller 116 may command the operating electrical circuit to reduce its electrical power consumption to accommodate the lowered storage ability of the rechargeable power pack 140 once one or more component power packs has failed. The controller 116 is also able to command a user interface display 124 to present an indicator 134 that the rechargeable power pack 140 has partially failed. Other changes to the operating mode may be implemented as well, and the above examples are merely illustrative.

FIG. 2 illustrates an alternative power pack charging configuration 200 according to one example. The alternative power pack charging configuration 200 is similar to the power pack charging configuration 100 discussed above except that the alternative power pack charging configuration 200 includes a Coulomb counting capacity meter 224 instead of the ammeter 112 of the power pack charging configuration 100.

The alternative power pack charging configuration 200 illustrates an alternative rechargeable power source 202 that accepts electrical power in the form of a charging current from an external power source 204 and controls the charging of a rechargeable power pack 140. As discussed above with regards to the rechargeable power source 102, the alternative rechargeable power source 202 of various examples is incorporated into an electronic device, is able to be a stand-alone device that has internal power packs, or is able to be a stand alone device that operates with external power packs.

The rechargeable power pack 140 that is part of the alternative rechargeable power source 202 is similar to the rechargeable power pack 140 discussed above with regards to the rechargeable power source 102. The rechargeable power pack 140 includes a pair of separate component power packs including the first power pack 142 and the second power pack 144. The rechargeable power pack 140 accepts the charging current and stores energy obtained through the charging current. The stored energy is later provided to electrical devices to support their operation.

The component power packs in this example, i.e., the first power pack 142 and the second power pack 144, are rechargeable batteries that are electrically connected in a substantially parallel configuration. The rechargeable power pack 140 is able to include component power pack configurations, such as any number of component power packs that are connected substantially in parallel or serial, as is discussed above with regards to the rechargeable power source 102. Alternative designs for the component power packs, such as fuel cells and the like, are also able to be used.

The alternative rechargeable power source 202 connects to an external power source 204 through an external power connector 206. The external power source 204 provides electrical voltage and current to a charging controller 210. The charging controller 210 in one example is a power pack charging controller that provides intelligent charging of the rechargeable power pack 140, as is described below.

The alternative rechargeable power source 202 includes an operating electrical circuit connector 220 that connects the rechargeable power source 202 to an operating electrical circuit 230. The operating electrical circuit 230 receives electrical power through the alternative rechargeable power source 202 that originates either in the external power source 204 or the rechargeable power pack 140. In one example, the operating electrical circuit 230 is included in a device that also contains the rechargeable power source 202. In further examples, the operating electrical circuit 230 is separated from the rechargeable power source 202 and the two are electrically connected through the operating electrical circuit connector 220.

The charging controller 210 charges the rechargeable power pack 140 according to one or more charging profiles, as is described above with regards to the rechargeable power source 102. The alternative rechargeable power source 202 also includes a controller 216 that provides commands to the charging controller 210 to halt charging or to modify the charging profile to use for the rechargeable power pack 140. The controller 210 of one example determines if one component power pack, such as either the first power pack 142 or the second power pack 144, within the rechargeable power pack 140 has failed. In response to determining that a component power pack has failed, the controller 210 is able to halt charging or the controller 110 is able to command the charging controller to modify the charging profile to properly charge the remaining properly functioning component power packs.

The alternative rechargeable power source 202 includes a Coulomb counting capacity meter 224 that is electrically connected substantially in series between the rechargeable power pack 140 and the operating circuit connector 220. The Coulomb counting capacity meter 224 in one example is a power pack capacity monitor that is a dedicated circuit configured to continually monitor the amount of electrical current being delivered to or taken from the rechargeable power pack 140. The Coulomb counting capacity meter 224 measures a net amount of charging current, or Coulombs, that is delivered to the rechargeable power pack 140 less the amount of charging current drawn from the rechargeable power pack 140. Based upon these measurements, the Coulomb counting capacity meter 224 of one example is able to output a net amount of charge or discharge, which is able to be expressed in units such as Amp-Hours, that is able to be compared to the rated capacity capability of the rechargeable power pack 140 to estimate a present capacity.

The Coulomb counting capacity meter 224 is electrically connected to the rechargeable power pack 140 in such a way that it measures the net electrical current flowing into the rechargeable power pack 140 and also the net electrical current drawn from the rechargeable power pack 140. The Coulomb counting capacity meter 224 provides to the controller 116 values of the amount of measured net electrical current flowing into or out of the rechargeable power pack 140. The illustrated example alternative rechargeable power source 202 depicts the Coulomb counting capacity meter 224 connected to a positive side of the power pack 140. Further examples are able to include a Coulomb counting capacity meter 224 that is alternatively connected to the negative side of the power pack 140.

In one example, the estimate of present capacity of the rechargeable power pack 140 based upon measurements reported by the Coulomb counting capacity meter 224 can be represented as a fraction of the rated capacity of the rechargeable power pack. These fractions of rated capacity estimates are dependent upon a value for the rated capacity capability for the rechargeable power pack 140. In one example, the rated capacity capability of the rechargeable power pack is configured into the alternative rechargeable power source 202. In the event that a component power pack, such as the first power pack 142 or the second power pack 144, within the rechargeable power pack 140 fails, the actual rated capacity of the rechargeable power pack 140 is significantly reduced because there are fewer component power packs receiving the charging current and producing power to deliver to operating circuits.

Using an example of a rechargeable power pack 140 that has two equally sized component power packs, a failure of one of those component power packs causes the present capacity estimate as reported by the Coulomb counting capacity meter 224 to be roughly half of the capacity that would be estimated by, for example, measuring the loaded or unloaded voltage of the rechargeable power pack 140. As described in further detail below, the controller 216 of one example determines that a component power pack has failed by comparing present capacity estimates based upon measurements reported by the Coulomb counting capacity meter 224 to present power pack capacities estimated by measuring the loaded or unloaded output voltage of the rechargeable power pack 140.

The alternative rechargeable power source 202 is also shown to include a voltmeter 218, or other voltage sensing means, that is electrically connected substantially in parallel with the rechargeable power pack 140. The depicted voltmeter 218 is used to measure the terminal voltage of the rechargeable power pack 140 to measure the voltage of the rechargeable power pack and provide values of those measurements to the controller 216. The depicted voltmeter 218 is able to be a separate component of the alternative rechargeable power source 202. In some examples, the Coulomb counting capacity meter 224 also measures and reports the unloaded voltage of the rechargeable power pack 140. In such examples, a separate voltmeter 218 is not included but its function is performed by the Coulomb counting capacity meter 224. In various examples, the voltmeter 218 is able to the measure loaded output voltage of the rechargeable power pack 140. Various examples are able to use the loaded output voltage directly or determine the unloaded voltage based on the present power pack current and impedance. Some techniques for determining unloaded voltage based on the present power pack current and impedance are described above.

The controller 216 accesses stored values of expected capacity change values 222. The values stored in the expected capacity change values 222 are able to be determined, for example, by empirical measurements of an example rechargeable power pack 140. The expected capacity change values 222 are able to be stored in, for example, a table encoded within a non-volatile memory device that is accessed by the controller 216. Such a non-volatile memory device is able to be part of the controller 216 or a separate memory device. In one example, the expected capacity change values are able to be stored in a non-volatile memory device that is part of the rechargeable power pack 140. The expected capacity change values 222 are able to be programmed into a non-volatile memory device during a manufacturing process for the alternative rechargeable power source 202 or rechargeable power pack 140, at various times during the operation or maintenance of the rechargeable power source 202, or at any time.

In various examples, the expected capacity change values 222 include one or more of the following:

1) Expected change in loaded or unloaded voltage for a particular net Coulomb count reported by the Coulomb counting capacity meter 224;

2) Expected change in charging current at a specified charging voltage for a particular net Coulomb count reported by the Coulomb counting capacity meter 224;

3) Expected charging Coulomb count to reach a full charge;

4) Expected drawn Coulomb count to discharge a substantially charged power pack; and

Expected impedance at a given capacity, adjusted for temperature and life cycle degradation.

The values for the above quantities are generally dependent upon the initial loaded or unloaded voltage of the rechargeable power pack 140 at the beginning of a measurement duration.

The expected capacity change values 222 are able to store expected impedance values for the rechargeable power pack 140. The expected impedance is the ratio of charging voltage and input current while the rechargeable power pack is being charged. These expected impedances are dependent upon the temperature of the rechargeable power pack 140. The expected impedances are also dependent upon the number of times that that the rechargeable power pack has been discharged and recharged, a phenomenon referred to as "life cycle degradation." The expected capacity change values 222 is able to store an array of expected impedances for a rechargeable power pack 140 that are functions of 1) present capacity; 2) present temperature; and 3) number of discharge and recharge cycles experienced by the rechargeable power pack 140.

In one example, the controller 216 performs processing similar to that described above as being performed by the controller 116 of the rechargeable power source 102. The controller receives information from one or more of the coulomb counting capacity meter 224 the voltmeter 218, and the charging controller 210 to performs the functions of a power pack charging monitor, a power pack capacity monitor, a controller, and a power pack charging controller.

As described in further detail below, the controller 216 receives measured values, such as loaded or unloaded rechargeable power pack voltages from the voltmeter 118 and charging or discharge Coulomb counts from the Coulomb counting capacity meter 224, and compares those received measured values to expected values stored in the expected capacity change values 222. If the measured capacity of the rechargeable power pack 140 changes more rapidly than would be expected, a determination is made that one component power pack, such as the first component power pack 142 or the second component power pack 144, within the rechargeable power pack 140 has failed. In response to determining that a component power pack has failed, the controller 216 is able to command the charging controller 210 to modify its charging profile to accommodate the reduced ability of the rechargeable power pack 140 to accept charging current. Additionally, in response to determining that a component power pack has failed, the controller 216 is able to command the operating electrical circuit 230, through a control channel provided through the operating circuit connector 220, to change its operating mode. For example, the controller 216 may command the operating electrical circuit to reduce its electrical power consumption to accommodate the lowered storage ability of the rechargeable power pack 140 once one or more component power packs has failed. The controller 216 is also able to command a user interface display 250 to present an indicator that the rechargeable power pack 140 has partially failed. Other changes to the operating mode may be implemented as well.

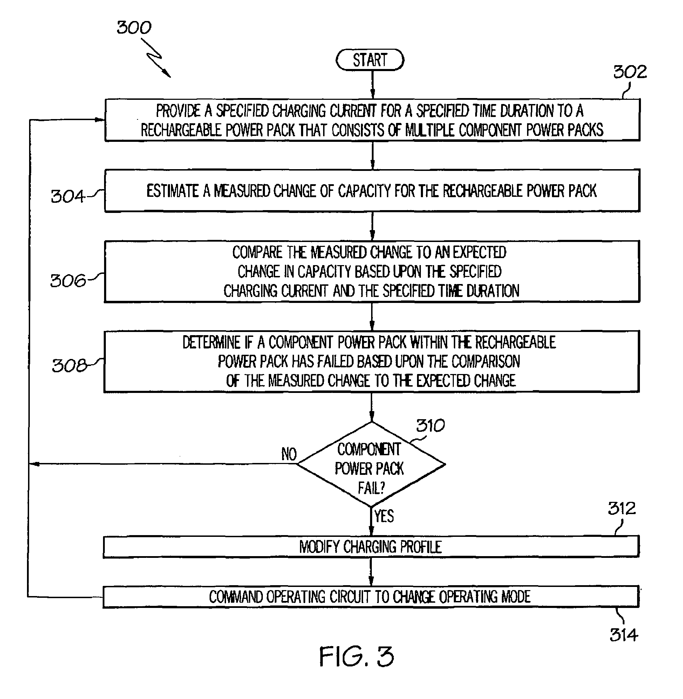

FIG. 3 illustrates a fixed time failed component power pack determination process 300, in accordance with one example. The fixed time failed component power pack determination process 300 is used by either the power pack charging configuration 100 or the alternative power pack charging configuration 200, described above, to determine if a component power pack, such as the first power pack 142 or the second power pack 144, within a rechargeable power pack has failed.

The fixed time failed component power pack determination process 300 begins by providing (that is, supplying), at 302, an amount of charging current to a power pack for a specified time duration, where the power pack contains a number of component power packs. The rechargeable power pack 140, described above, is an example of a power pack that includes two component power packs. In one example, the charging controller 110 provides the amount of charging current by having a processor within the charging controller 110 control charging circuits within the charging controller 110 to supply a specified determined charging voltage or current.

With reference to FIG. 1 the amount of charging current is able to be provided by the charging controller 110. In one example, an amount of charging current is able to be in the form of a constant charging current at a known value that is provided into the rechargeable power pack for a fixed time duration that corresponds to the specified time. Further examples of providing an amount of charging current include providing a variable charging current value as controlled to a known level by a current controller within the charging control 110, or providing a variable charging current value that is monitored by, for example, an ammeter 112 or a Coulomb counting capacity meter 224 as is discussed above with regards to the alternative power pack charging configuration 200. Monitored charging current levels are able to be summed or integrated over the specified time duration to determine the amount of provided charging current.

The fixed time failed component power pack determination process 300 continues by estimating, at 304, a measured change of capacity in the rechargeable power pack during the specified time during which the amount of charging current was provided. One example of estimating a measured change of capacity of the rechargeable power pack is measuring a change in loaded or unloaded voltage during the time that the specified charging current was provided. In one example, the measured change in capacity or the measured change in loaded or unloaded voltage is a capacity change quantity.

The fixed time failed component power pack determination process 300 continues by comparing, at 306, the measured change of capacity to an expected change in capacity for the device's rechargeable power pack given the amount of charging current and the amount of time that the current was provided. In one example, expected changes in capacity for the specified amount of charging current are based on empirical data or calculated estimates for a particular rechargeable power pack. Expected changes in capacity are stored, for example in the expected capacity change values 122 described above.

The fixed time failed component power pack determination process 300 continues by determining, at 308, if a failure of a component power pack within the rechargeable power pack has occurred based upon the comparison of the measured change of capacity to an expected change in capacity for the device's rechargeable power pack given the amount of charging current. For example, a failed component power pack is determined or declared if the measured change in power pack capacity, such as is measured by a change in loaded or unloaded voltage, is significantly greater than the expected change in capacity. That comparison of expected and measured capacities indicates that the rechargeable power pack is able to reach its rated capacity with less charging current that would be expected. This discrepancy is assumed to be caused by a failure of one or more component power pack.

The fixed time failed component power pack determination process 300 branches, at 310, based upon the determination that a component power pack within the rechargeable power pack has failed. If it is not determined that a component power pack has failed, the fixed time failed component power pack determination process 300 returns to providing an amount of charging current to the rechargeable power pack for a specified time, at 302.

If it is determined that a component power pack has failed, the fixed time failed component power pack determination process 300 continues by modifying, at 312, the charging profile used by the charging controller. In an example with rechargeable power pack with two component power packs where one of the component power packs has failed, a charging profile is used that provides substantially one half of charging current that is specified for the rechargeable power pack if both component power packs were operating properly.

In one example, an operating mode of an operating circuit, such as operating circuit 130, is changed, at 314, to accommodate the reduced capacity of the rechargeable power pack. In further examples, the operating mode of the operating circuit is not changed in response to determining that a component power pack within a rechargeable power pack has failed. The fixed time failed component power pack determination process 300 then returns to providing a specified charging current to the rechargeable power pack, at 302, according to the changed charging profile.

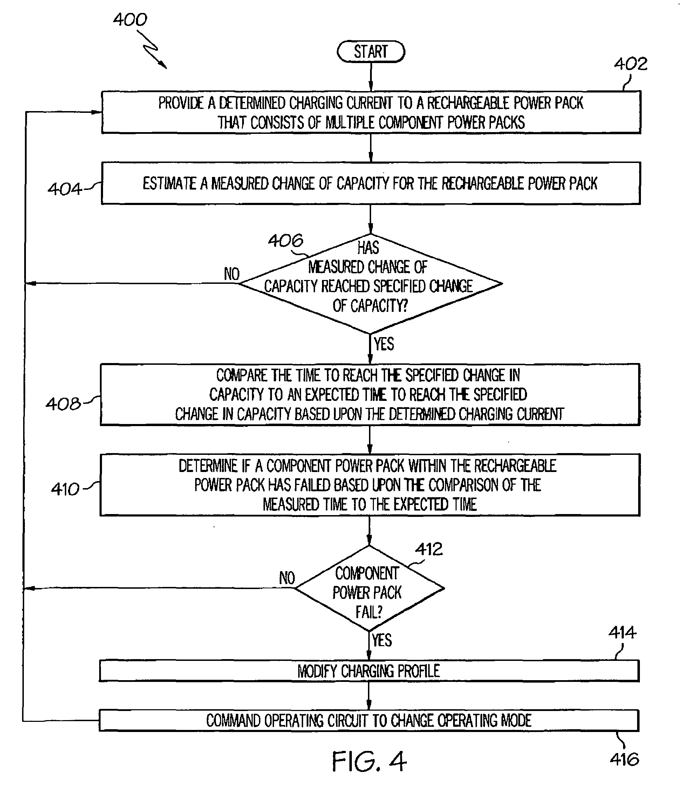

FIG. 4 illustrates a fixed capacity change component power pack failure determination process 400, in accordance with one example. In one example, the charging controller 110 uses a charging profile that provides a constant charging current level until the loaded or unloaded output voltage of the rechargeable power pack reaches a threshold. Once this threshold is reached, the charging controller provides a specified constant voltage to continue charging the rechargeable power pack. The fixed capacity change component power pack failure determination process 400 is performed, for example, by the controller 116 during a period when the charging controller 110 is providing the constant charging current to the rechargeable power pack. In the fixed capacity change component power pack failure determination process 400, the determined charging current is provided until a specified change in battery capacity is observed. The specified change in battery capacity is determined in one example by measuring a change in loaded or unloaded voltage. The time duration required to observe this change in capacity under the constant charging current condition is measured and compared to an expected charging time required to reach the measured change in capacity. Based on this comparison of measured charging time and expected charging time to produce the specified change in capacity, a determination is made as to whether a component power pack in the rechargeable power pack has failed.

The fixed capacity change component power pack failure determination process 400 begins by providing, at 402, a charging current at a determined level to a rechargeable power pack, where the rechargeable power pack contains multiple component power packs. The rechargeable power pack 140, described above, is an example of a rechargeable power pack that includes two component power packs. With reference to FIG. 1, a determined level of charging current is able to be provided by the charging controller 110 under the command of the controller 116. In one example, the value of the determined charging current is able to be specified as, for example, part of a charging profile that is defined prior to performing the fixed capacity change component power pack failure determination process 400. In further examples, the value of the determined charging current is not specified prior to performing the fixed capacity change component power pack failure determination process 400 but is a value that is measured during the providing step and used to control further processing, as is described below.

One example of a determined charging current that is a specified value is a constant charging current with a known value that is provided into the rechargeable power pack until a specified change of loaded or unloaded voltage is observed for the rechargeable power pack 140. Further examples of providing the determined charging current include providing a variable charging current value that is controlled at a known level by a current controller within the charging control 110. In an example of a determined charging current that is monitored during the providing step, a variable charging current is provided to the rechargeable power pack 140 and that charging current is monitored by, for example, an ammeter 112 or a Coulomb counting capacity meter 224 as is discussed above. In examples that monitor charging current levels, measured monitored charging current levels are able to be summed or integrated over time to determine the average charging current.

The fixed capacity change component power pack failure determination process 400 continues by estimating, at 404, a measured change of capacity for the rechargeable power pack. One example of measuring a change of capacity of the rechargeable power pack is measuring a change in loaded or unloaded voltage during the time that the determined charging current was provided. Another example of estimating a measured change of capacity of a rechargeable power pack is measuring a change in the impedance of the rechargeable power pack by, for example, measuring a change the charging current level provided to the rechargeable power pack at a particular voltage level or by measuring a change in charging voltage for a particular charging current level. The change in impedance during a time duration can also be measured by subtracting the ratio of charging voltage levels to charging current levels that are measured at the beginning and the end of the time duration. Measured changes in capacity that are based upon changes in impedance are adjusted for the temperature and the life cycle degradation of the rechargeable power pack, as is described above.

The fixed capacity change component power pack failure determination process 400 continues by determining, at 406, if the measured change in capacity has reached a specified change in capacity. In one example, the specified change in capacity is able to be a defined configuration parameter. If the specified change in capacity was not reached, the fixed capacity change component power pack failure determination process 400 returns to providing, at 402, the determined charging current.

The fixed capacity change component power pack failure determination process 400 continues by comparing, at 408, the time to reach the specified change in capacity to an expected time duration to reach the specified change in capacity for the device's rechargeable power pack given the determined amount of charging current. In one example, a timer measures the time duration that is required for the rechargeable power pack to reach the specified change in capacity. In one example, the expected time duration to reach the specified change in capacity for the determined amount of charging current is based on empirical data or calculated estimates for a particular rechargeable power pack. Expected time durations to reach the specified changes in capacity are also stored, for example in the expected capacity change values 122 described above.

The fixed capacity change component power pack failure determination process 400 continues by determining, at 410, if a failure of a component power pack within the rechargeable power pack has occurred based upon the comparison of the measured time to reach the specified change of capacity to the expected time duration to reach the specified change in capacity for the device's rechargeable power pack given the determined charging current. For example, a failed component power pack is determined or declared if the measured time to reach the specified change in power pack capacity, such as is measured by a change in loaded or unloaded voltage, is significantly less than the expected time duration. The comparison of the expected time duration and measured time indicates that the rechargeable power pack is charging faster than is expected with the amount of charging current being provided, and therefore indicates a failure of one or more component power pack has occurred.

The fixed capacity change component power pack failure determination process 400 branches, at 412, based upon the determination that a component power pack within the rechargeable power pack has failed. If it is not determined that a component power pack has failed, the fixed capacity change component power pack failure determination process 400 returns to providing a determined charging current to the rechargeable power pack, at 402.

If it is determined that a component power pack has failed, the fixed capacity change component power pack failure determination process 400 continues by modifying, at 414, the charging profile used by the charging controller. In an example with a rechargeable power pack that has two component power packs where one of the component power packs has failed, a charging profile is used that provides substantially one half of charging current that is specified for the rechargeable power pack if both component power packs were operating properly.

In one example, an operating mode of an operating circuit, such as operating circuit 130, is changed, at 416, to accommodate the reduced capacity of the rechargeable power pack. In further examples, the operating mode of the operating circuit is not changed in response to determining that a component power pack within a rechargeable power pack has failed. The fixed capacity change component power pack failure determination process 400 then returns to providing a determined charging current to the rechargeable power pack, at 402, according to the changed charging profile.

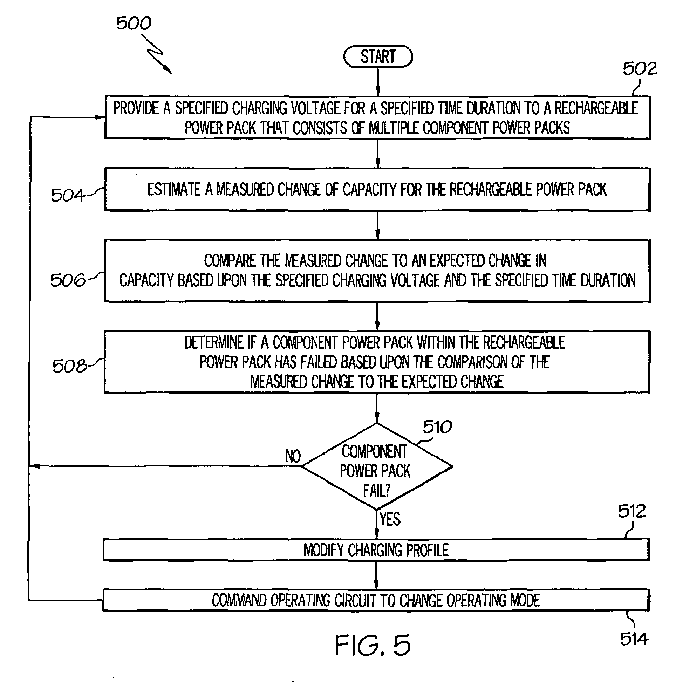

FIG. 5 illustrates a fixed time fixed voltage failed component power pack determination process 500, in accordance with one example. The fixed time fixed voltage failed component power pack determination process 500 is used by either the power pack charging configuration 100 or the alternative power pack charging configuration 200, described above, to determine if a component power pack, such as the first power pack 142 or the second power pack 144, within a rechargeable power pack has failed.

As discussed above, the charging controller 110 uses a charging profile that provides a constant charging current until the loaded or unloaded output voltage of the rechargeable power pack reaches a threshold. Once this threshold is reached, the charging controller provides a specified constant voltage to continue charging the rechargeable power pack. The fixed time fixed voltage failed component power pack determination process 500 in one example is performed once the rechargeable power pack has reached that threshold loaded or unloaded voltage and a constant charging voltage is applied to charge the rechargeable power pack.

The fixed time fixed voltage failed component power pack determination process 500 begins by providing, at 502, a charging current at a fixed charging voltage to a power pack for a specified time duration, where the power pack contains a number of component power packs. The rechargeable power pack 140, described above, is an example of a power pack that includes two component power packs.

With reference to FIG. 1 the charging current at the fixed charging voltage is able to be provided by the charging controller 110. In one example, the charging controller 110 sets a specified constant voltage level for the charging current at a specified charging voltage. Alternatively, the charging voltage is monitored by, for example, the voltmeter 118 as is discussed above with regards to the power pack charging configuration 100. This charging current in one example is provided for a fixed time duration that corresponds to the specified time duration.

The fixed time fixed voltage failed component power pack determination process 500 continues by estimating, at 504, a measured change of capacity in the rechargeable power pack during the specified time during which the charging current was provided at the fixed voltage. One example of estimating a measured change of capacity of the rechargeable power pack is measuring a change in loaded or unloaded voltage during the time that the charging current was provided. Another example of estimating a measured change of capacity of a rechargeable power pack is measuring a change in the impedance of the rechargeable power pack by measuring, for example, a change the charging current level provided to the rechargeable power pack at a particular voltage level during the specified time. Methods to determine changes in impedance of a rechargeable power pack are described above in further detail.

The fixed time fixed voltage failed component power pack determination process 500 continues by comparing, at 506, the measured change of capacity to an expected change in capacity for the device's rechargeable power pack given the amount of time that the charging current was provided at the specified voltage. As is described above, expected changes in capacity when charging the rechargeable power pack with the fixed voltage for the specified time are based on empirical data or calculated estimates for a particular rechargeable power pack. Expected changes in capacity are stored, for example, in the expected capacity change values 122 described above.

The fixed time fixed voltage failed component power pack determination process 500 continues by determining, at 508, if a failure of a component power pack within the rechargeable power pack has occurred based upon the comparison of the measured change of capacity to an expected change in capacity for the device's rechargeable power pack given the fixed charging voltage. For example, a failed component power pack is determined or declared if the measured change in power pack capacity, such as is measured by a change in loaded or unloaded voltage, is significantly greater than the expected change in capacity. The comparison of expected and measured capacities indicates that the rechargeable power pack is able to reach its rated capacity with less charging current that would be expected. This discrepancy is assumed to be caused by a failure of one or more component power pack.

The fixed time fixed voltage failed component power pack determination process 500 branches, at 510, based upon the determination that a component power pack within the rechargeable power pack has failed. If it is not determined that a component power pack has failed, the fixed time fixed voltage failed component power pack determination process 500 returns to providing charging current to the rechargeable power pack at a fixed voltage for a specified time, at 502.

If it is determined that a component power pack has failed, the fixed time fixed voltage failed component power pack determination process 500 continues by modifying, at 512, the charging profile used by the charging controller. In an example with rechargeable power pack with two component power packs where one of the component power packs has failed, a charging profile is used that accommodates the reduced capacity of the rechargeable power pack by limiting a maximum charging current provided to the rechargeable power pack. In one example of a rechargeable power pack with two component power packs, the charging profile is modified to provide substantially one half of charging current that is specified for the rechargeable power pack if both component power packs were operating properly.

In one example, an operating mode of an operating circuit, such as operating circuit 130, is changed, at 514, to accommodate the reduced capacity of the rechargeable power pack. In further examples, the operating mode of the operating circuit is not changed in response to determining that a component power pack within a rechargeable power pack has failed. The fixed time fixed voltage failed component power pack determination process 500 then returns to providing charging current to the rechargeable power pack at a fixed voltage, at 502, according to the changed charging profile.

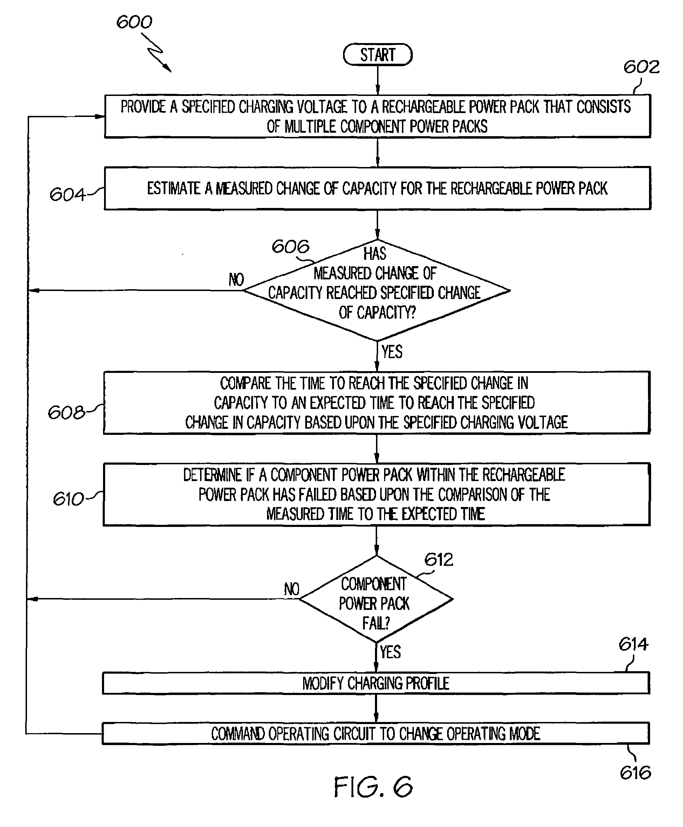

FIG. 6 illustrates a constant voltage fixed capacity change component power pack failure determination process 600, in accordance with one example. In one example, the charging controller 110 uses a charging profile that provides a constant charging current until the loaded or unloaded output voltage of the rechargeable power pack reaches a threshold. Once this threshold is reached, the charging controller provides a specified constant voltage to continue charging the rechargeable power pack.

The constant voltage fixed capacity change component power pack failure determination process 600 is performed, for example, by a charging controller 110 after the threshold loaded or unloaded voltage is reached and while the charging controller 110 is providing the charging current at a specified constant voltage to the rechargeable power pack. In the constant voltage fixed capacity change component power pack failure determination process 600, the charging current at a fixed voltage is provided until a specified change in battery capacity is observed.

The constant voltage fixed capacity change component power pack failure determination process 600 begins by providing, at 602, a charging current at a fixed voltage level to a rechargeable power pack, where the rechargeable power pack contains multiple component power packs. The rechargeable power pack 140, described above, is an example of a rechargeable power pack that includes two component power packs. With reference to FIG. 1, the charging current at the fixed voltage is able to be provided by voltage controller within the charging control 110, or by providing a voltage monitored by, for example, the voltmeter 118 as is discussed above with regards to the power pack charging configuration 100.

The constant voltage fixed capacity change component power pack failure determination process 600 continues by estimating, at 604, a measured change of capacity for the rechargeable power pack. One example of measuring a change of capacity of the rechargeable power pack is measuring a change in loaded or unloaded voltage during the time that the specified charging current was provided. Another example of estimating a measured change of capacity of a rechargeable power pack is measuring a change in the impedance of the rechargeable power pack by, for example, measuring a change the charging current level provided to the rechargeable power pack at a particular voltage level or by measuring a change in charging voltage for a particular charging current level. The change in impedance during a time duration can also be measured by subtracting the ratio of charging voltage levels to charging current levels that are measured at the beginning and the end of the time duration. Measured changes in capacity that are based upon changes in impedance are adjusted for the temperature and the life cycle degradation of the rechargeable power pack, as is described above.

The constant voltage fixed capacity change component power pack failure determination process 600 continues by determining, at 606, if the measured change in capacity has reached a specified change in capacity. In one example, the specified change in capacity is able to be a defined configuration parameter. If the specified change in capacity was not reached, the constant voltage fixed capacity change component power pack failure determination process 600 returns to providing, at 602, the specified charging voltage.

The constant voltage fixed capacity change component power pack failure determination process 600 continues by comparing, at 608, the measured time to reach the specified change in capacity to an expected time duration to reach the specified change in capacity for the device's rechargeable power pack given the fixed voltage of the charging current. In one example, expected time duration to reach the specified change in capacity for the specified amount of charging current is based on empirical data or calculated estimates for a particular rechargeable power pack. Expected time durations to reach the specified changes in capacity are also stored, for example in the expected capacity change values 122 described above.

The constant voltage fixed capacity change component power pack failure determination process 600 continues by determining, at 610, if a failure of a component power pack within the rechargeable power pack has occurred based upon the comparison of the measured change of capacity to an expected change in capacity for the device's rechargeable power pack given the fixed charging voltage. For example, a failed component power pack is determined or declared if the measured change in power pack capacity, such as is measured by a change in loaded or unloaded voltage, is significantly greater than the expected change in capacity. That comparison of expected and measured capacities indicates that the rechargeable power pack is able to reach its rated capacity with less charging current that would be expected. This discrepancy is assumed to be caused by a failure of one or more component power pack.

The constant voltage fixed capacity change component power pack failure determination process 600 branches, at 612, based upon the determination that a component power pack within the rechargeable power pack has failed. If it is not determined that a component power pack has failed, the constant voltage fixed capacity change component power pack failure determination process 600 returns to providing charging current to the rechargeable power pack at a fixed voltage for a specified time, at 602.

If it is determined that a component power pack has failed, the constant voltage fixed capacity change component power pack failure determination process 600 continues by modifying, at 614, the charging profile used by the charging controller. In an example with rechargeable power pack with two component power packs where one of the component power packs has failed, a charging profile is used that accommodates the reduced capacity of the rechargeable power pack by limiting a maximum charging current provided to the rechargeable power pack. In one example of a rechargeable power pack with two component power packs, the charging profile is modified to provide substantially one half of charging current that is specified for the rechargeable power pack if both component power packs were operating properly.

In one example, an operating mode of an operating circuit, such as operating circuit 130, is changed, at 616, to accommodate the reduced capacity of the rechargeable power pack. In further examples, the operating mode of the operating circuit is not changed in response to determining that a component power pack within a rechargeable power pack has failed. The constant voltage fixed capacity change component power pack failure determination process 600 then returns to providing charging current to the rechargeable power pack at a fixed voltage, at 602, according to the changed charging profile.

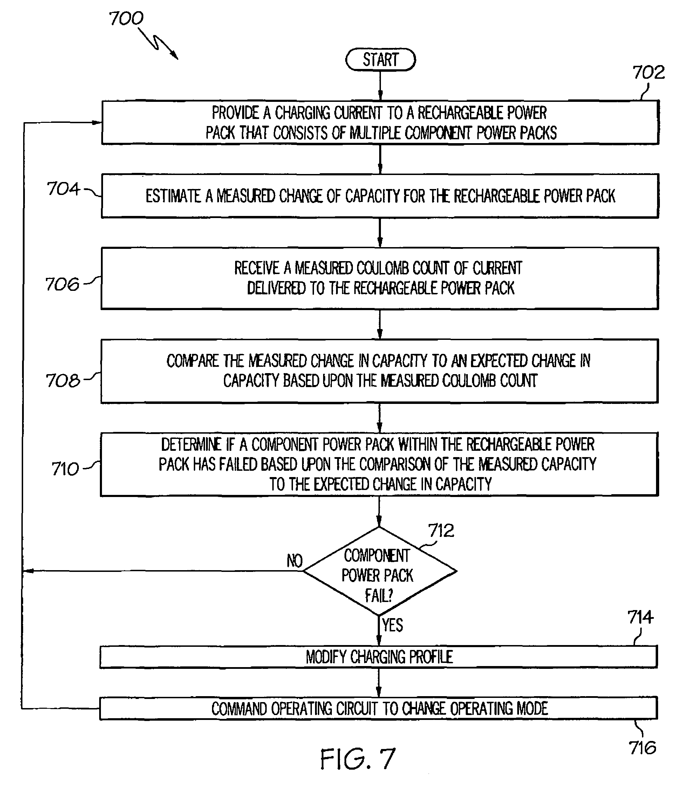

FIG. 7 illustrates a Coulomb counting failed component power pack determination process 700, in accordance with one example. The Coulomb counting failed component power pack determination process 700 is used by the alternative power pack charging configuration 200, described above, to determine if a component power pack, such as the first power pack 142 or the second power pack 144, within a rechargeable power pack has failed. The Coulomb counting failed component power pack determination process 700 in one example uses the Coulomb counting capacity meter 224 to determine a value of the net charge provided to the rechargeable power pack 140. The capacity of the rechargeable power pack 140 is then measured, such as by a voltmeter 218. The measured capacity is then compared to an estimated change in capacity of the rechargeable power back that would be expected based upon the value of the net charge provided to the rechargeable power pack. A significant Discrepancy between the measured capacity and expected capacity indicates a failed component power pack within the rechargeable power pack 140.

Because the Coulomb counting failed component power pack determination process 700 uses Coulomb counting to determine the net amount of charging current provided to the rechargeable power pack 140, any current or voltage profile is able to be used to charge the rechargeable power pack 140. The Coulomb counting failed component power pack determination process 700 is able to use a constant current charging profile, a constant voltage charging profile, or the charging current or voltage is able to be varied in any manner during the Coulomb counting failed component power pack determination process 700.

The Coulomb counting failed component power pack determination process 700 begins by providing, at 702, a charging current to a power pack for a specified time duration, where the power pack contains a number of component power packs. The rechargeable power pack 140, described above, is an example of a power pack that includes two component power packs.

With reference to FIG. 2, the amount of charging current is able to be provided by the charging controller 210. Because the Coulomb counting failed component power pack determination process 700 is based upon Coulomb counting of the net charge provided to the rechargeable power pack 140, any current profile is able to be used. In one example, an amount of charging current is able to be in the form of a constant charging current at a known value that is provided into the rechargeable power pack. Further examples provide a charging current with any time varying value of charging current. This charging current in one example is provided for a fixed time duration that corresponds to the specified time duration.

The Coulomb counting failed component power pack determination process 700 continues by estimating, at 704, a measured change of capacity in the rechargeable power pack during the specified time during which the amount of charging current was provided. One example of estimating a measured change of capacity of the rechargeable power pack is measuring a change in loaded or unloaded voltage during the time that the charging current was provided. Another example of estimating a measured change of capacity of a rechargeable power pack is measuring a change in the impedance of the rechargeable power pack by measuring, for example, a change the charging current level provided to the rechargeable power pack at a particular voltage level during the specified time. Measured changes in capacity that are based upon changes in impedance are adjusted for the temperature and the life cycle degradation of the rechargeable power pack, as is described above.

The Coulomb counting failed component power pack determination process 700 continues by estimating, at 706, a measured Coulomb count of current delivered to the rechargeable power pack. In one example, the measured Coulomb count is provided by the Coulomb counting capacity meter 224. In further examples, a measured Coulomb count is able to be derived by integrating an output of an ammeter 112 in the power pack charging configuration 100.

The Coulomb counting failed component power pack determination process 700 continues by comparing, at 708, the measured change of capacity to an expected change in capacity for the device's rechargeable power pack given the measured Coulomb count of charging current delivered to the rechargeable power pack 140. In one example, expected changes in capacity for the measured Coulomb count are based on empirical data or calculated estimates for a particular rechargeable power pack. Expected changes in capacity are stored, for example in the expected capacity change values 222 described above.

The Coulomb counting failed component power pack determination process 700 continues by determining, at 710, if a failure of a component power pack within the rechargeable power pack has occurred based upon the comparison of the measured change of capacity to an expected change in capacity for the device's rechargeable power pack given the measured Coulomb count. For example, a failed component power pack is determined or declared if the measured change in power pack capacity, such as is measured by a change in loaded or unloaded voltage, is significantly greater than the expected change in capacity. That comparison of expected and measured capacities indicates that the rechargeable power pack is able to reach its rated capacity with less charging current that would be expected. This discrepancy is assumed to be caused by a failure of one or more component power pack.

In one example, the Coulomb counting failed component power pack determination process 700 is performed on a fully charged rechargeable power pack 140 after the external power source 204 has been removed and the operating electrical circuit 230 is powered by the energy stored in the rechargeable power pack 140. The rechargeable power pack 140 is determined to be fully charged based upon, for example, the loaded or unloaded voltage as measured by the voltmeter 218. Once the external power source 204 is disconnected and no charging takes place, the Coulomb counting failed component power pack determination process 700 monitors the discharge of the rechargeable power pack by monitoring loaded or unloaded voltage and determining net discharge current based upon Coulomb counting. In one example, the Coulomb counting failed component power pack determination process 700 is performed until the rechargeable power pack 140 discharges to its minimum useful output voltage.

In another example, the Coulomb counting failed component power pack determination process 700 is performed on a fully discharged rechargeable power pack 140 after the external power source 204 is connected to charge the rechargeable power pack. In this example, the Coulomb counting failed component power pack determination process 700 is performed with the external power source 204 connected until the rechargeable power pack 140 has reached a fully charged state. The rechargeable power pack 140 is determined to be in a fully charged state based upon, for example, the loaded or unloaded voltage as measured by the voltmeter 218.

The Coulomb counting failed component power pack determination process 700 branches, at 712, based upon the determination that a component power pack within the rechargeable power pack has failed. If it is not determined that a component power pack has failed, the Coulomb counting failed component power pack determination process 700 returns to providing charging current to the rechargeable power pack for a specified time, at 702.

If it is determined that a component power pack has failed, the Coulomb counting failed component power pack determination process 700 continues by modifying, at 714, the charging profile used by the charging controller. In an example with rechargeable power pack with two component power packs where one of the component power packs has failed, a charging profile is used that provides substantially one half of charging current that is specified for the rechargeable power pack if both component power packs were operating properly.

In one example, an operating mode of an operating circuit, such as operating circuit 130, is changed, at 716, to accommodate the reduced capacity of the rechargeable power pack. In further examples, the operating mode of the operating circuit is not changed in response to determining that a component power pack within a rechargeable power pack has failed. The Coulomb counting failed component power pack determination process 700 then returns to providing charging current to the rechargeable power pack, at 702, according to the changed charging profile.

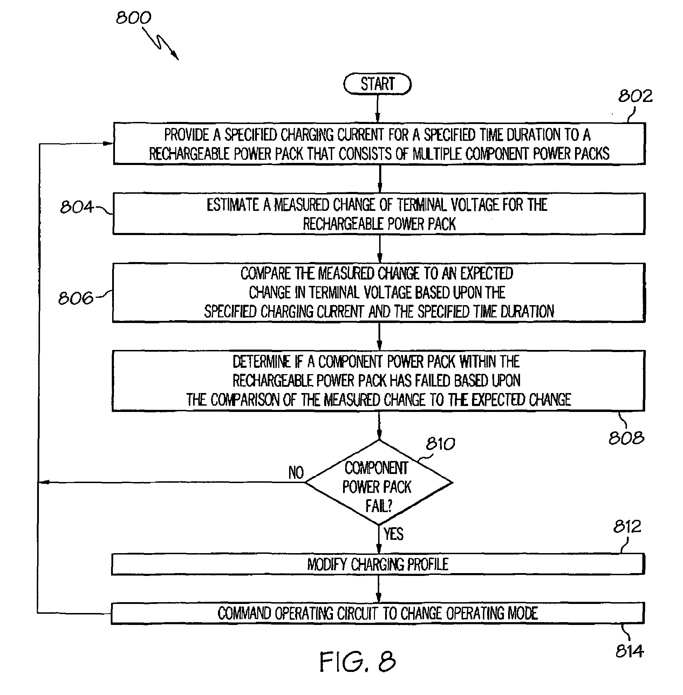

FIG. 8 illustrates a voltage measuring fixed time failed component power pack determination process 800, in accordance with one example. The voltage measuring fixed time failed component power pack determination process 800 is used by either the power pack charging configuration 100 or the alternative power pack charging configuration 200, described above, to determine if a component power pack, such as the first power pack 142 or the second power pack 144, within a rechargeable power pack has failed. The voltage measuring fixed time failed component power pack determination process 800 is similar to the fixed time failed component power pack determination process 300, described above, except that the processing depends upon measured and expected changes in terminal voltage of the rechargeable power pack 140 instead of measured and estimated changes in capacities.

The voltage measuring fixed time failed component power pack determination process 800 begins by providing, at 802, an amount of charging current to a power pack for a specified time duration, where the power pack contains a number of component power packs. The rechargeable power pack 140, described above, is an example of a power pack that includes two component power packs. As discussed above, the amount of charging current is able to be provided by the charging controller 110 depicted in FIG. 1 or a variable charging current value is able to be provided that is monitored by, for example, an ammeter 112 or a Coulomb counting capacity meter 224 as is discussed above with regards to the alternative power pack charging configuration 200. Monitored charging current levels are able to be summed or integrated over the specified time duration to determine the amount of provided charging current.

The voltage measuring fixed time failed component power pack determination process 800 continues by estimating, at 804, a measured change in terminal voltage of the rechargeable power pack during the specified time during which the amount of charging current was provided. One example of estimating a measured change of terminal voltage of the rechargeable power pack is measuring a change in loaded or unloaded terminal voltage during the time that the specified charging current was provided, such as with the volt meter 118.

The voltage measuring fixed time failed component power pack determination process 800 continues by comparing, at 806, the measured change in terminal voltage to an expected change in terminal voltage for the device's rechargeable power pack given the amount of charging current and the amount of time that the current was provided. In one example, expected changes in terminal voltage for the specified amount of charging current are based on empirical data or calculated estimates for a particular rechargeable power pack. Expected changes in terminal voltage are stored, for example in the expected capacity change values 122 described above.

The voltage measuring fixed time failed component power pack determination process 800 continues by determining, at 808, if a failure of a component power pack within the rechargeable power pack has occurred based upon the comparison of the measured change of terminal voltage to an expected change in terminal voltage of the device's rechargeable power pack given the amount of charging current. For example, a failed component power pack is determined or declared if the measured change in power pack loaded or unloaded terminal voltage is significantly greater than the expected change in terminal voltage. That comparison of expected and measured terminal voltages indicates that the rechargeable power pack is able to reach its rated fully charged terminal voltage or capacity with less charging current that would be expected. This discrepancy is assumed to be caused by a failure of one or more component power pack.

The voltage measuring fixed time failed component power pack determination process 800 branches, at 810, based upon the determination that a component power pack within the rechargeable power pack has failed. If it is not determined that a component power pack has failed, the voltage measuring fixed time failed component power pack determination process 800 returns to providing an amount of charging current to the rechargeable power pack for a specified time, at 802.

If it is determined that a component power pack has failed, the voltage measuring fixed time failed component power pack determination process 800 continues by modifying, at 812, the charging profile used by the charging controller. In an example with rechargeable power pack with two component power packs where one of the component power packs has failed, a charging profile is used that provides substantially one half of charging current that is specified for the rechargeable power pack if both component power packs were operating properly.

In one example, an operating mode of an operating circuit, such as operating circuit 130, is changed, at 814, to accommodate the reduced capacity of the rechargeable power pack. In further examples, the operating mode of the operating circuit is not changed in response to determining that a component power pack within a rechargeable power pack has failed. The voltage measuring fixed time failed component power pack determination process 800 then returns to providing a specified charging current to the rechargeable power pack, at 802, according to the changed charging profile.

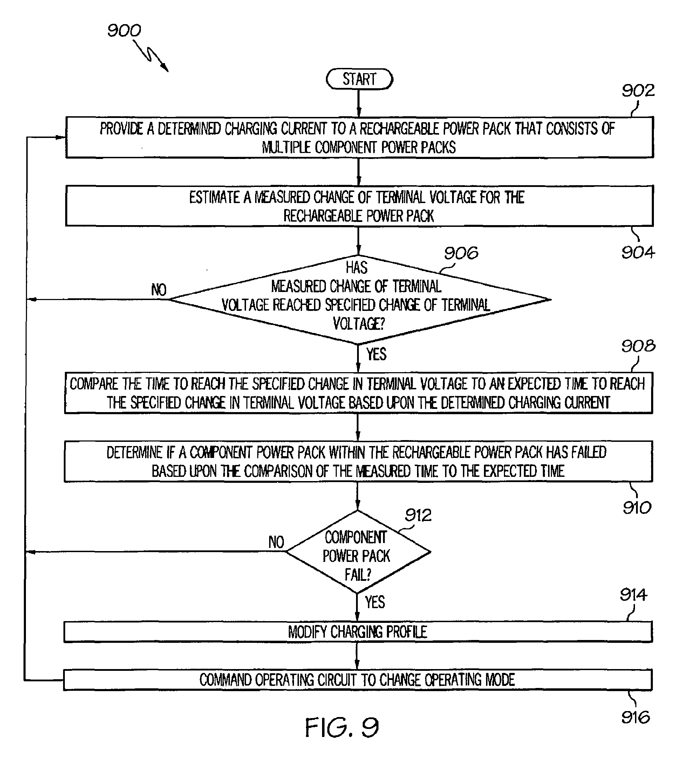

FIG. 9 illustrates a voltage measuring fixed voltage change component power pack failure determination process 900, in accordance with one example. In one example, the charging controller 110 uses a charging profile that provides a constant charging current until the loaded or unloaded terminal voltage of the rechargeable power pack reaches a threshold. Once this threshold is reached, the charging controller provides a specified constant voltage to continue charging the rechargeable power pack. The voltage measuring fixed voltage change component power pack failure determination process 900 is performed, for example, by a controller 116 while providing the constant charging current to the rechargeable power pack. In the voltage measuring fixed voltage change component power pack failure determination process 900, the determined charging current is provided until a specified change in battery terminal voltage is observed. The specified change in battery terminal voltage is determined in one example by measuring a change in unloaded or loaded terminal voltage of the rechargeable power pack 140. The time duration required to observe this change in terminal voltage under the constant charging current condition is measured and compared to an expected charging time required to reach the specified change in terminal voltage. Based on this comparison of measured charging time and expected charging time to produce the specified change in terminal voltage, a determination is made as to whether a component power pack in the rechargeable power pack has failed

The voltage measuring fixed voltage change component power pack failure determination process 900 begins by providing, at 402, a charging current at a determined level to a rechargeable power pack, where the rechargeable power pack contains multiple component power packs. The rechargeable power pack 140, described above, is an example of a rechargeable power pack that includes two component power packs. With reference to FIG. 1, a determined level of charging current is able to be provided by the charging controller 110. In one example, the value of the determined charging current is able to be specified as, for example, part of a charging profile. In further examples, the value of the determined charging current is not specified but is measured during the providing step.

One example of a determined charging current that is a specified value is a constant charging current with a known value that is provided into the rechargeable power pack until a specified change of loaded or unloaded terminal voltage is observed for the rechargeable power pack 140. Further examples of providing the determined charging current include providing a variable charging current value that is controlled at a known level by a current controller within the charging control 110. In an example of a determined charging current that is monitored during the providing step, a variable charging current is provided to the rechargeable power pack 140 and that charging current is monitored by, for example, an ammeter 112 or a Coulomb counting capacity meter 224 as is discussed above. In examples that monitor charging current levels, measured monitored charging current levels are able to be summed or integrated over time to determine the average charging current.

The voltage measuring fixed voltage change component power pack failure determination process 900 continues by estimating, at 904, a measured change of terminal voltage for the rechargeable power pack. One example of estimating a measured change of terminal voltage of the rechargeable power pack is measuring a change in loaded or unloaded terminal voltage during the time that the determined charging current was provided.

The voltage measuring fixed voltage change component power pack failure determination process 900 continues by determining, at 906, if the measured change in terminal voltage has reached a specified change in terminal voltage. In one example, the specified change in terminal voltage is able to be a defined configuration parameter. If the specified change in terminal voltage was not reached, the voltage measuring fixed voltage change component power pack failure determination process 900 returns to providing, at 902, the determined charging current.

The voltage measuring fixed voltage change component power pack failure determination process 900 continues by comparing, at 908, the time to reach the specified change in terminal voltage to an expected time duration to reach the specified change in terminal voltage for the device's rechargeable power pack given the determined amount of charging current. In one example, a timer measures the time duration that is required for the rechargeable power pack to reach the specified change in terminal voltage. In one example, the expected time duration to reach the specified change in terminal voltage for the determined amount of charging current is based on empirical data or calculated estimates for a particular rechargeable power pack. Expected time durations to reach the specified changes in terminal voltage are also stored, for example in the expected capacity change values 122 described above.

The voltage measuring fixed voltage change component power pack failure determination process 900 continues by determining, at 910, if a failure of a component power pack within the rechargeable power pack has occurred based upon the comparison of the measured time to reach the specified change of terminal voltage to the expected time duration to reach the specified change in terminal voltage for the device's rechargeable power pack given the determined charging current. For example, a failed component power pack is determined or declared if the measured time to reach the specified change in power pack terminal voltage, such as is measured by a change in loaded or unloaded terminal voltage, is significantly less than the expected time duration. The comparison of the expected time duration and measured time indicates that the rechargeable power pack is charging faster than is expected with the amount of charging current being provided, and therefore indicates a failure of one or more component power pack has occurred.

The voltage measuring fixed voltage change component power pack failure determination process 900 branches, at 912, based upon the determination that a component power pack within the rechargeable power pack has failed. If it is not determined that a component power pack has failed, the voltage measuring fixed voltage change component power pack failure determination process 900 returns to providing a determined charging current to the rechargeable power pack, at 902.

If it is determined that a component power pack has failed, the voltage measuring fixed voltage change component power pack failure determination process 900 continues by modifying, at 914, the charging profile used by the charging controller 110. In an example with a rechargeable power pack that has two component power packs where one of the component power packs has failed, a charging profile is used that provides substantially one half of charging current that is specified for the rechargeable power pack if both component power packs were operating properly.

In one example, an operating mode of an operating circuit, such as operating circuit 130, is changed, at 416, to accommodate the reduced capacity of the rechargeable power pack. In further examples, the operating mode of the operating circuit is not changed in response to determining that a component power pack within a rechargeable power pack has failed. The voltage measuring fixed voltage change component power pack failure determination process 900 then returns to providing a determined charging current to the rechargeable power pack, at 402, according to the changed charging profile.

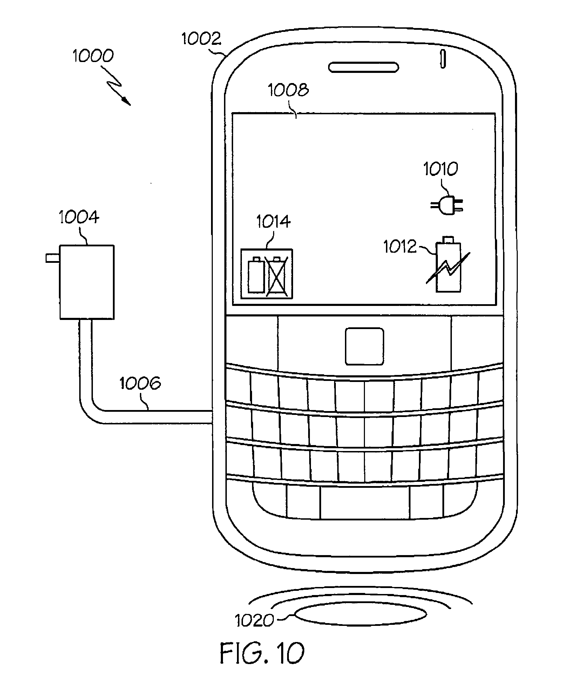

FIG. 10 is an example handheld communications device charging configuration 1000 according to one example. The example handheld communications device charging configuration 1000 shows a portable electronic device 1002, such as a Personal Digital Assistant (PDA), a smart-phone, a cellular telephone, a tablet computer, or any other type of portable electronic device. The portable electronic device 1002 receives external power from an external power source 1004 power through one or more interfaces, such as a DC power connection 1006.

As an alternative to receiving power through a DC power connection 1006, external power is also able to be provided through a wireless charging base 1020. In one example, a wireless charging base 1020 wirelessly provides external power to the portable electronic device 1002 through, for example, inductive coupling or other suitable techniques.

The portable electronic device 1002 has a display 1008. The display 1008 depicted in FIG. 10 is an alpha numeric display capable of displaying various icons as indicators of a corresponding status or event within the portable electronic device 1002.

The illustrated display 1008 displays an external power connected icon 1010 and a power pack charging icon 1012. In various examples, the external power connected icon 1010 is displayed whenever an external power source 1004 is connected to the DC power connection 1006 or a wireless charging base 1020 is detected as providing external power to the portable electronic device 1002. The power pack charging icon 1012 is displayed whenever a determination is made that the power pack of the portable electronic device is charging.

The illustrated display 1008 further displays a failed component power pack indicator 1014. The portable electronic device 1002 of this example has a rechargeable power pack that includes several component power packs. The component power packs in this example are wired in a substantially parallel configuration. The failed component power pack indicator 1014 is an indication that one component power pack within the rechargeable power pack has failed. Detecting the failure of a component power pack within a rechargeable power pack is described in detail above.

The failed component power pack indicator 1014 is an indication to a user that the portable electronic device 1002 has reduced power pack capability and service may be required. Further examples of user interfaces are able to present other indicators to a user that a determination is made that a component power pack within the device's rechargeable power pack has failed. For example, an indictor light or other indicator is able to be used alone or in conjunction with a display 1008 to indicate a failed component power pack.

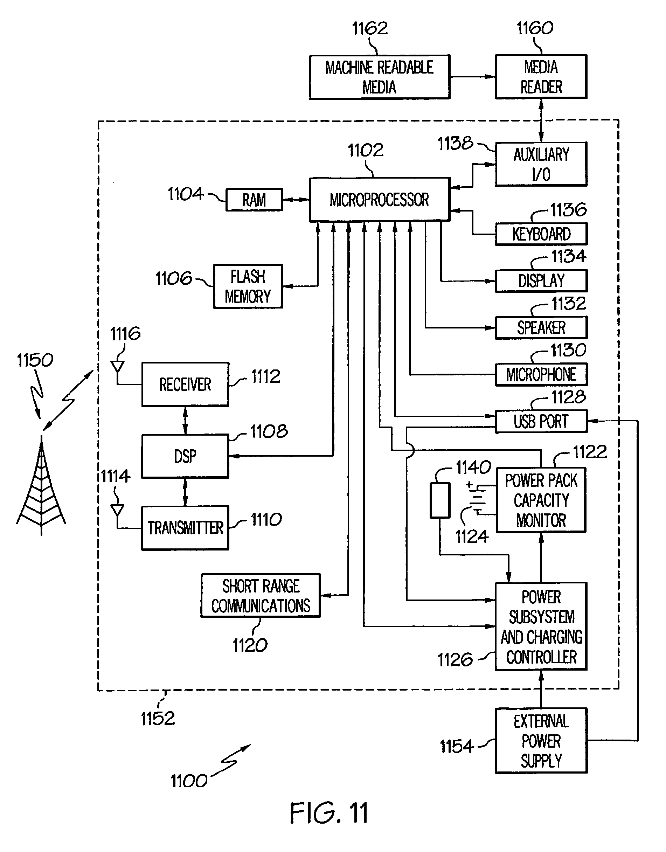

FIG. 11 is a block diagram of an electronic device and associated components 1100 in which the systems and methods disclosed herein may be implemented. In this example, an electronic device 1152 is a wireless two-way communication device with voice and data communication capabilities. Such electronic devices communicate with a wireless voice or data network 1150 using a suitable wireless communications protocol. Wireless voice communications are performed using either an analog or digital wireless communication channel. Data communications allow the electronic device 1152 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 1152 is an example electronic device that includes two-way wireless communications functions. Such electronic devices incorporate communication subsystem elements such as a wireless transmitter 1110, a wireless receiver 1112, and associated components such as one or more antenna elements 1114 and 1116. A digital signal processor (DSP) 1108 performs processing to extract data from received wireless signals and to generate signals to be transmitted. The particular design of the communication subsystem is dependent upon the communication network and associated wireless communications protocols with which the device is intended to operate.

The electronic device 1152 includes a microprocessor 1102 that controls the overall operation of the electronic device 1152. The microprocessor 1102 interacts with the above described communications subsystem elements and also interacts with other device subsystems such as flash memory 1106, random access memory (RAM) 1104, auxiliary input/output (I/O) device 1138, USB Port 1128, display 1134, keyboard 1136, speaker 1132, microphone 1130, a short-range communications subsystem 1120, a battery capacity monitor 1122, a power subsystem and charging controller 1126, and any other device subsystems.

A battery 1124 is connected to a battery capacity monitor 1122 and a power subsystem and charging controller 1126 as is described in detail above. The battery 1124 is a rechargeable power pack that contains multiple component power packs, as is described above. The battery 1124 provides power to the circuits of the electronic device 1152. The power subsystem and charging controller 1126 includes power distribution circuitry for providing power to the electronic device 1152 and also contains battery charging controller circuitry to manage charging the battery 1124. A battery temperature monitor 1140 monitors the temperature of the battery 1124 and reports the temperature to the power subsystem and charging controller 1126. The battery 1124, battery capacity monitor 1122, and the power subsystem and charging controller 1126 correspond to the power pack charging configuration 100 and alternative power pack charging configuration 200, discussed above.

The power subsystem and charging controller 1126 receives battery temperature measurements from the battery temperature monitor 1140. The power subsystem and charging controller 1126 halts charging when the battery temperature exceeds a threshold. The power subsystem and charging controller 1126 further is able to use the received battery temperatures to adjust power pack impedance measurements for the battery 1124 based on temperature, as is discussed above. In various examples, one or more of the power subsystem and charging controller 1126, the battery 1124, and the battery capacity monitor 1122 are non-removeably mounted in a housing along with other components of the electronic device 1152.

The microprocessor 1102 is able to perform the functions described above as performed by the controller 116 and controller 216. The microprocessor 1102 in some examples monitors the status and indications produced by the battery capacity monitor 1122 and the power subsystem and charging controller 1126 to perform the processing described above with regards to FIGs. 3-7. The power subsystem and charging controller 1126 includes a battery monitoring circuit is operable to provide measured values of power pack characteristics to support a determination by the processing of microprocessor 1102 to determine if a power pack component within the battery 1124 has failed, as is discussed above.

The USB port 1128 provides data communication between the electronic device 1152 and one or more external devices. Data communication through USB port 1128 enables a user to set preferences through the external device or through a software application and extends the capabilities of the device by enabling information or software exchange through direct connections between the electronic device 1152 and external data sources rather than through a wireless data communication network.

Operating system software used by the microprocessor 1102 is stored in flash memory 1106. Further examples are able to use a battery backed-up RAM or other non-volatile storage data elements to store operating systems, other executable programs, or both. The operating system software, device application software, or parts thereof, are able to be temporarily loaded into volatile data storage such as RAM 1104. Data received via wireless communication signals or through wired communications are also able to be stored to RAM 1104. As an example, computer executable programs configured to perform the several component power pack failure determination processes that are described above are included in a software module stored in flash memory 1106.

The microprocessor 1102, in addition to its operating system functions, is able to execute software applications on the electronic device 1152. A set of applications that control basic device operations, including at least data and voice communication applications, is able to be installed on the electronic device 1152 during manufacture. Examples of applications that are able to be loaded onto the device may be a personal information manager (PIM) application having the ability to organize and manage data items relating to the device user, such as, but not limited to, e-mail, calendar events, voice mails, appointments, and task items.

Further applications may also be loaded onto the electronic device 1152 through, for example, the wireless network 1150, an auxiliary I/O device 1138, USB port 1128, short-range communications subsystem 1120, or any combination of these interfaces. Such applications are then able to be installed by a user in the RAM 1104 or a non-volatile store for execution by the microprocessor 1102.

In a data communication mode, a received signal such as a text message or web page download is processed by the communication subsystem, including wireless receiver 1112 and wireless transmitter 1110, and communicated data is provided the microprocessor 1102, which is able to further process the received data for output to the display 1134, or alternatively, to an auxiliary I/O device 1138 or the USB port 1128. A user of the electronic device 1152 may also compose data items, such as e-mail messages, using the keyboard 1136, which is able to include a complete alphanumeric keyboard or a telephone-type keypad, in conjunction with the display 1134 and possibly an auxiliary I/O device 1138. Such composed items are then able to be transmitted over a communication network through the communication subsystem.

For voice communications, overall operation of the electronic device 1152 is substantially similar, except that received signals are generally provided to a speaker 1132 and signals for transmission are generally produced by a microphone 1130. Alternative voice or audio I/O subsystems, such as a voice message recording subsystem, may also be implemented on the electronic device 1152. Although voice or audio signal output is generally accomplished primarily through the speaker 1132, the display 1134 may also be used to provide an indication of the identity of a calling party, the duration of a voice call, or other voice call related information, for example.

Depending on conditions or statuses of the electronic device 1152, one or more particular functions associated with a subsystem circuit may be disabled, or an entire subsystem circuit may be disabled. For example, if a component power pack within a rechargeable power pack is determined to have failed, then voice functions may be disabled, but data communications, such as e-mail, may still be enabled over the communication subsystem.

A short-range communications subsystem 1120 is a further optional component which may provide for communication between the electronic device 1152 and different systems or devices, which need not necessarily be similar devices. For example, the short-range communications subsystem 1120 may include an infrared device and associated circuits and components or a Radio Frequency based communication module such as one supporting Bluetooth^{®} communications, to provide for communication with similarly-enabled systems and devices.

A media reader 1160 is able to be connected to an auxiliary I/O device 1138 to allow, for example, loading computer readable program code of a computer program product into the electronic device 1152 for storage into flash memory 1106. One example of a media reader 1160 is an optical drive such as a CD/DVD drive, which may be used to store data to and read data from a computer readable medium or storage product such as computer readable storage media 1162. Examples of suitable computer readable storage media include optical storage media such as a CD or DVD, magnetic media, or any other suitable data storage device. Media reader 1160 is alternatively able to be connected to the electronic device through the USB port 1128 or computer readable program code is alternatively able to be provided to the electronic device 1152 through the wireless network 1150.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

Non-Limiting Examples

Although specific embodiments of the subject matter have been disclosed, those having ordinary skill in the art will understand that changes can be made to the specific embodiments without departing from the scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A method for controlling power pack charging (300, 400, 500, 600, 700, 800, 900), the method comprising:
determining at least one parameter of a charging current (302, 402, 502, 602, 702, 802, 902), comprising a charging current or a determined voltage provided to a rechargeable power pack (140), the rechargeable power pack comprising a plurality of component power packs (142, 144), the charging current being provided for a time duration;
estimating a measured capacity change quantity (304, 404, 504, 604, 704, 804, 904) for the rechargeable power pack during the time duration;
comparing, after the time duration, the measured capacity change quantity to an expected capacity change quantity (306, 408, 506, 608, 708, 806, 908), the expected capacity change quantity based upon the at least one parameter;
determining, based on a difference between the measured capacity change quantity and the expected capacity change quantity, that at least one component power pack has failed (308, 410, 508, 610, 710, 808, 910), the at least one component power pack comprising fewer than all of the plurality of component power packs; and
modifying a charging current parameter in response to the determining that the at least one component power pack has failed (312, 414, 512, 614, 714, 812, 914).

2. The method of claim 1, further comprising:
providing the charging current to the rechargeable power pack at a determined current level (302, 802), wherein the determining at least one parameter comprises setting the determined current level,
wherein the time duration is a fixed time duration (302, 802), and
wherein the measured capacity change quantity comprises a measured change in one of loaded voltage and unloaded voltage during the time duration (304, 804) and the expected capacity change quantity comprises an expected change in the one of loaded voltage and unloaded voltage given charging the rechargeable power pack at the determined current level for the fixed time duration (306, 806).

3. The method of any of claims 1 or 2, further comprising:
providing the charging current to the rechargeable power pack at a specified determined voltage (502), wherein the determining at least one parameter comprises setting the specified determined voltage,
wherein the time duration is a fixed time duration (502), and
wherein the measured capacity change quantity comprises a measured change in charging current during the time duration (504) and the expected capacity change quantity comprises an expected change in charging current given charging the rechargeable power pack at the specified determined voltage for the fixed time duration (506).

4. The method of any of claims 1, 2, or 3, further comprising:
providing the charging current to the rechargeable power pack at a determined charging voltage (602), wherein the determining at least one parameter comprises setting the determined charging voltage,
wherein the time duration is determined based upon a time for the rechargeable power pack to reach a specified change in capacity (608), and
wherein the measured capacity change quantity comprises the time duration (608) and the expected capacity change quantity comprises an expected time duration for the specified change in capacity given charging the rechargeable power pack at the determined charging voltage (610).

5. The method of any of claims 1, 2, 3, or 4, further comprising:
providing the charging current to the rechargeable power pack at a determined charging current level (902), wherein the determining at least one parameter comprises setting the determined current level,
wherein the time duration is determined based upon a time for the rechargeable power pack to reach a specified change in capacity (908), and
wherein the measured capacity change quantity comprises the time duration (908) and the expected capacity change quantity comprises an expected time duration for the specified change in capacity given charging the rechargeable power pack at the determined current level (910).

6. The method of any of claims 1, 2, 3, 4, or 5,
wherein the determining at least one parameter of the charging current comprises measuring a measured amount of net charging current provided during the time duration to the rechargeable power pack (402),
wherein the time duration is determined based upon a time for the rechargeable power pack to reach a specified change in capacity (408), and
wherein the measured capacity change quantity comprises the time duration (408) and the expected capacity change quantity comprises an expected time duration for the specified change in capacity given the measured amount of net charging current provided during the time duration (410).

7. The method of any of claims 1, 2, 3, 4, 5 or 6,
wherein the determining at least one parameter of the charging current comprises measuring a measured amount of net charging current provided to the rechargeable power pack during the time duration (706),
wherein the method further comprises estimating a measured change in capacity of the rechargeable power pack during the time duration (704), and
wherein the measured capacity change quantity comprises the measured change in capacity (708) and the expected capacity change quantity comprises an expected change in capacity that corresponds to the specified amount of total charging current (708).

8. An apparatus for charging a power pack (100, 200), the apparatus comprising:
a power pack charging monitor (112, 118, 218, 224) configured to determine at least one parameter of a charging current (302, 402, 502, 602, 702, 802, 902), comprising a charging current or a determined voltage, provided to a rechargeable power pack (140), the rechargeable power pack comprising a plurality of component power packs (142, 144), the charging current being provided for a time duration;
a power pack capacity monitor (112, 118, 218, 224) configured to estimate a measured capacity change quantity (304, 404, 504, 604, 704, 804, 904) for the rechargeable power pack during the time duration; and
a power pack charging controller (116, 216) configured to:
compare, after the time duration, the measured capacity change quantity to an expected capacity change quantity, the expected capacity change quantity (306, 408, 506, 608, 708, 806, 908) based upon the at least one parameter;
determine, based on a difference between the measured capacity change quantity and the expected capacity change quantity, that at least one component power pack has failed (308, 410, 508, 610, 710, 808, 910), the at least one component power pack comprising fewer than all of the plurality of component power packs; and
modify a charging current parameter in response to the determining that the at least one component power pack has failed (312, 414, 512, 614, 714, 812, 914).

9. The apparatus of claim 8, further comprising:
a controllable charging current source (110, 210), communicatively coupled to the power pack charging controller, the controllable charging current source providing a configurable charging current level,
wherein the power pack charging controller is configured to determine the at least one parameter by at least configuring the controllable charging current source to provide the charging current at a determined current level (302, 802),
wherein the time duration is a fixed time duration (302, 802), and
wherein the power pack capacity monitor estimates the measured capacity change quantity by at least estimating a measured change in one of loaded voltage and unloaded voltage during the time duration (304, 804), and
wherein the expected capacity change quantity comprises an expected change in the one of loaded voltage and unloaded voltage given charging the rechargeable power pack at the determined current level for the fixed time duration (306, 806).

10. The apparatus of any of claims 8, or 9, further comprising:
a controllable charging voltage source (110, 210), communicatively coupled to the power pack charging controller, the controllable charging voltage source providing the charging current at a configurable determined voltage,
wherein the power pack charging controller is configured to determine the at least one parameter by at least configuring the controllable charging voltage source to provide the charging current at a specified determined voltage (502),
wherein the time duration is a fixed time duration (502), and
wherein the measured capacity change quantity comprises a measured change in charging current during the time duration (504) and the expected capacity change quantity comprises an expected change in charging current given charging the rechargeable power pack at the specified determined voltage for the fixed time duration (506).

11. The apparatus of any of claims 8, 9, or 10, further comprising:
a controllable charging voltage source (110, 210), communicatively coupled to the power pack charging controller, the controllable charging voltage source providing the charging current at a configurable determined voltage,
wherein the power pack charging controller is configured to determine the at least one parameter by at least configuring the controllable charging voltage source to provide the charging current at a specified determined voltage (602),
wherein the power pack capacity monitor is further configured to determine the time duration based upon determining a time for the rechargeable power pack to reach a specified change in capacity (608), and
wherein the measured capacity change quantity comprises the time duration (608) and the expected capacity change quantity comprises an expected time duration for the specified change in capacity given charging the rechargeable power pack at the specified determined voltage for the time duration (610).

12. The apparatus of any of claims 8, 9, 10, or 11,
wherein the power pack charging monitor is configured to determine at least one parameter of the charging current by at least measuring a measured amount of net charging current provided during the time duration to the rechargeable power pack (902),
wherein the power pack capacity monitor is further configured to determine the time duration based upon determining a time for the rechargeable power pack to reach a specified change in capacity (908), and
wherein the measured capacity change quantity comprises the time duration (908) and the expected capacity change quantity comprises an expected time duration for the specified change in capacity given the measured amount of net charging current provided during the time duration (910).

13. The apparatus of any of claim 8, 9, 10, 11, or 12,
wherein the power pack charging monitor is configured to determine at least one parameter of the charging current by at least measuring a measured amount of net charging current provided during the time duration to the rechargeable power pack (402),
wherein the power pack capacity monitor is further configured to determine the time duration based upon determining a time for the rechargeable power pack to reach a specified change in capacity (408), and
wherein the measured capacity change quantity comprises the time duration (408) and the expected capacity change quantity comprises an expected time duration for the specified change in capacity given the measured amount of net charging current provided during the time duration (410).

14. The apparatus of any of claim 8, 9, 10, 11, 12, or 13,
wherein the power pack charging monitor is configured to determine at least one parameter of the charging current by at least measuring a measured amount of net charging current provided during the time duration to the rechargeable power pack (706),
wherein the power pack capacity monitor is configured to estimate the measured capacity change quantity by at least estimating a measured change in capacity of the rechargeable power pack during the time duration (704), and
wherein the measured capacity change quantity comprises the measured change in capacity (708) and the expected capacity change quantity comprises an expected change in capacity that corresponds to the specified amount of charging current (708).

15. A computer readable medium having computer executable instructions adapted to cause the device to perform the method of any one of claims 1, 2, 3, 4, 5, 6, or 7.

16. A data carrier carrying data comprising instructions executable by computer processing means to cause these means to carry out a method according to any one of claims 1-7.

## Patentansprüche

1. Ein Verfahren zur Steuerung eines Ladens (300, 400, 500, 600, 700, 800, 900) eines Energieelements, wobei das Verfahren aufweist:
Bestimmen zumindest eines Parameters eines Ladestroms (302, 402, 502, 602, 702, 802, 902), der einen Ladestrom oder eine bestimmte Spannung aufweist, der an ein wiederaufladbares Energieelement geliefert wird (140), wobei das wiederaufladbare Energieelement eine Vielzahl von Komponente-Energieelementen aufweist (142, 144), wobei der Ladestrom für eine Zeitdauer vorgesehen wird;
Schätzen einer gemessenen Kapazitätsänderungsquantität (304, 404, 504, 604, 704, 804, 904) für das wiederaufladbare Energieelement während der Zeitdauer;
Vergleichen, nach der Zeitdauer, der gemessenen Kapazitätsänderungsquantität mit einer erwarteten Kapazitätsänderungsquantität (306, 408, 506, 608, 708, 806, 908), wobei die erwartete Kapazitätsänderungsquantität auf dem zumindest einen Parameter basiert;
Bestimmen, basierend auf einer Differenz zwischen der gemessenen Kapazitätsänderungsquantität und der erwarteten Kapazitätsänderungsquantität, dass zumindest ein Komponente-Energieelement ausgefallen ist (308, 410, 508, 610, 710, 808, 910), wobei das zumindest eine Komponente-Energieelement weniger als alle der Vielzahl von Komponente-Energieelementen aufweist; und
Modifizieren eines Ladestrom-Parameters in Reaktion auf das Bestimmen, dass das zumindest eine Komponente-Energieelement ausgefallen ist (312, 414, 512, 614, 714, 812, 914).

2. Das Verfahren gemäß Anspruch 1, das weiter aufweist:
Liefern des Ladestroms an das wiederaufladbare Energieelement mit einem bestimmten Strompegel (302, 802), wobei das Bestimmen zumindest eines Parameters ein Einstellen des bestimmten Strompegels aufweist,
wobei die Zeitdauer eine feste Zeitdauer ist (302, 802), und
wobei die gemessene Kapazitätsänderungsquantität eine gemessene Änderung in einem einer Lastspannung und einer Leerspannung während der Zeitdauer aufweist (304, 804) und die erwartete Kapazitätsänderungsquantität eine erwartete Änderung in der einen der Lastspannung und der Leerspannung bei einem Laden des wiederaufladbaren Energieelements mit dem bestimmten Strompegel für die feste Zeitdauer aufweist (306, 806).

3. Das Verfahren gemäß einem der Ansprüche 1 oder 2, das weiter aufweist:
Liefern des Ladestroms an das wiederaufladbare Energieelement mit einer spezifizierten bestimmten Spannung (502), wobei das Bestimmen zumindest eines Parameters ein Einstellen der spezifizierten bestimmten Spannung aufweist,
wobei die Zeitdauer eine feste Zeitdauer ist (502), und
wobei die gemessene Kapazitätsänderungsquantität eine gemessene Änderung in einem Ladestrom während der Zeitdauer aufweist (504) und die erwartete Kapazitätsänderungsquantität eine erwartete Änderung in einem Ladestrom bei einem Laden der wiederaufladbaren Energieelements mit der spezifizierten bestimmten Spannung für die feste Zeitdauer aufweist (506).

4. Das Verfahren gemäß einem der Ansprüche 1, 2, oder 3, das weiter aufweist:
Liefern des Ladestroms an das wiederaufladbare Energieelement mit einer bestimmten Ladespannung (602), wobei das Bestimmen zumindest eines Parameters ein Einstellen der bestimmten Ladespannung aufweist,
wobei die Zeitdauer bestimmt wird basierend auf einer Zeit für das wiederaufladbare Energieelement, eine spezifizierte Änderung der Kapazität zu erreichen (608), und
wobei die gemessene Kapazitätsänderungsquantität die Zeitdauer aufweist (608), und die erwartete Kapazitätsänderungsquantität eine erwartete Zeitdauer für die spezifizierte Änderung der Kapazität bei einem Laden des wiederaufladbaren Energieelements mit der bestimmten Ladespannung aufweist (610).

5. Das Verfahren gemäß einem der Ansprüche 1, 2, 3, oder 4, das weiter aufweist:
Liefern des Ladestroms an das wiederaufladbare Energieelement mit einem bestimmten Ladestrompegel (902), wobei das Bestimmen zumindest eines Parameters ein Einstellen des bestimmten Strompegels aufweist,
wobei die Zeitdauer bestimmt wird basierend auf einer Zeit für das wiederaufladbare Energieelement, eine spezifizierte Änderung der Kapazität zu erreichen (908), und
wobei die gemessene Kapazitätsänderungsquantität die Zeitdauer aufweist (908) und die erwartete Kapazitätsänderungsquantität eine erwartete Zeitdauer für die spezifizierte Änderung der Kapazität bei einem Laden des wiederaufladbaren Energieelements mit dem bestimmten Strompegel aufweist (910).

6. Das Verfahren gemäß einem der Ansprüche 1, 2, 3, 4, oder 5,
wobei das Bestimmen zumindest eines Parameters des Ladestroms aufweist ein Messen einer gemessenen Menge eines Netto-Ladestroms, der während der Zeitdauer an das wiederaufladbare Energieelement vorgesehen wird (402),
wobei die Zeitdauer bestimmt wird basierend auf einer Zeit für das wiederaufladbare Energieelement, eine spezifizierte Änderung der Kapazität zu erreichen (408), und
wobei die gemessene Kapazitätsänderungsquantität die Zeitdauer aufweist (408) und die erwartete Kapazitätsänderungsquantität eine erwartete Zeitdauer für die spezifizierte Änderung der Kapazität bei der gemessenen Menge von Netto-Ladestrom aufweist, der während der Zeitdauer vorgesehen wird (410).

7. Das Verfahren gemäß einem der Ansprüche 1, 2, 3, 4, 5 oder 6,
wobei das Bestimmen zumindest eines Parameters des Ladestroms aufweist ein Messen einer gemessenen Menge von Netto-Ladestrom, der an das wiederaufladbare Energieelement während der Zeitdauer vorgesehen wird (706),
wobei das Verfahren weiter aufweist ein Schätzen einer gemessenen Änderung der Kapazität des wiederaufladbaren Energieelements während der Zeitdauer (704), und
wobei die gemessene Kapazitätsänderungsquantität die gemessene Änderung der Kapazität aufweist (708) und die erwartete Kapazitätsänderungsquantität eine erwartete Änderung der Kapazität aufweist, die der spezifizierten Menge von Gesamt-Ladestrom entspricht (708).

8. Eine Vorrichtung zum Laden eines Energieelements (100, 200), wobei die Vorrichtung aufweist:
eine Energieelement-Lade-Überwachungseinrichtung (112, 118, 218, 224), die konfiguriert ist zum Bestimmen zumindest eines Parameters eines Ladestroms (302, 402, 502, 602, 702, 802, 902), der einen Ladestrom oder eine bestimmte Spannung aufweist, der an ein wiederaufladbares Energieelement geliefert wird (140), wobei das wiederaufladbare Energieelement eine Vielzahl von Komponente-Energieelementen aufweist (142, 144), wobei der Ladestrom für eine Zeitdauer vorgesehen wird;
eine Energieelement-Kapazitäts-Überwachungseinrichtung (112, 118, 218, 224), die konfiguriert ist zum Schätzen einer gemessenen Kapazitätsänderungsquantität (304, 404, 504, 604, 704, 804, 904) für das wiederaufladbare Energieelement während der Zeitdauer; und
eine Energieelement-Lade-Steuervorrichtung (116, 216), die konfiguriert ist zum:
Vergleichen, nach der Zeitdauer, der gemessenen Kapazitätsänderungsquantität mit einer erwarteten Kapazitätsänderungsquantität, wobei die erwartete Kapazitätsänderungsquantität (306, 408, 506, 608, 708, 806, 908) auf dem zumindest einen Parameter basiert;
Bestimmen, basierend auf einer Differenz zwischen der gemessenen Kapazitätsänderungsquantität und der erwarteten Kapazitätsänderungsquantität, dass zumindest ein Komponente-Energieelement ausgefallen ist (308, 410, 508, 610, 710, 808, 910),
wobei das zumindest eine Komponente-Energieelement weniger als alle der Vielzahl von Komponente-Energieelementen aufweist; und Modifizieren eines Ladestrom-Parameters in Reaktion auf das Bestimmen, dass das zumindest eine Komponente-Energieelement ausgefallen ist (312, 414, 512, 614, 714, 812, 914).

9. Die Vorrichtung gemäß Anspruch 8, die weiter aufweist:
eine steuerbare Ladestromquelle (110, 210), die kommunikativ mit der Energieelement-Lade-Steuervorrichtung gekoppelt ist, wobei die steuerbare Ladestromquelle einen konfigurierbaren Ladestrompegel vorsieht,
wobei die Energieelement-Lade-Steuervorrichtung konfiguriert ist zum Bestimmen des zumindest einen Parameters durch zumindest Konfigurieren der steuerbaren Ladestromquelle zum Vorsehen des Ladestroms mit einem bestimmten Strompegel (302, 802),
wobei die Zeitdauer eine feste Zeitdauer ist (302, 802), und wobei die Energieelement-Kapazitäts-Überwachungseinrichtung die gemessene Kapazitätsänderungsquantität schätzt durch zumindest Schätzen einer gemessenen Änderung in einem einer Lastspannung und einer Leerspannung während der Zeitdauer (304, 804), und
die erwartete Kapazitätsänderungsquantität eine erwartete Änderung in der einen der Lastspannung und der Leerspannung bei einem Laden des wiederaufladbaren Energieelements mit dem bestimmten Strompegel für die feste Zeitdauer aufweist (306, 806).

10. Die Vorrichtung gemäß einem der Ansprüche 8 oder 9, die weiter aufweist:
eine steuerbare Ladespannungsquelle (110, 210), die kommunikativ mit der Energieelement-Lade-Steuervorrichtung gekoppelt ist, wobei die steuerbare Ladespannungsquelle den Ladestrom mit einer konfigurierbaren bestimmten Spannung vorsieht,
wobei die Energieelement-Lade-Steuervorrichtung konfiguriert ist zum Bestimmen des zumindest einen Parameters durch zumindest Konfigurieren der steuerbaren Ladespannungsquelle zum Liefern des Ladestroms mit einer spezifizierten bestimmten Spannung (502), wobei die Zeitdauer eine feste Zeitdauer ist (502), und
wobei die gemessene Kapazitätsänderungsquantität eine gemessene Änderung in einem Ladestrom während der Zeitdauer aufweist (504) und die erwartete Kapazitätsänderungsquantität eine erwartete Änderung in einem Ladestrom bei einem Laden des wiederaufladbaren Energieelements mit der spezifizierten bestimmten Spannung für die feste Zeitdauer aufweist (506).

11. Die Vorrichtung gemäß einem der Ansprüche 8, 9 oder 10, die weiter aufweist:
eine steuerbare Ladespannungsquelle (110, 210), die kommunikativ mit der Energieelement-Lade-Steuervorrichtung gekoppelt ist, wobei die steuerbare Ladespannungsquelle den Ladestrom mit einer konfigurierbaren bestimmten Spannung vorsieht,
wobei die Energieelement-Lade-Steuervorrichtung konfiguriert ist zum Bestimmen des zumindest einen Parameters durch zumindest Konfigurieren der steuerbaren Ladespannungsquelle zum Liefern des Ladestroms mit einer spezifizierten bestimmten Spannung (602),
wobei die Energieelement-Kapazitäts-Überwachungseinrichtung weiter konfiguriert ist zum Bestimmen der Zeitdauer basierend auf einem Bestimmen einer Zeit für das wiederaufladbare Energieelement, eine spezifizierte Änderung der Kapazität zu erreichen (608), und
wobei die gemessene Kapazitätsänderungsquantität die Zeitdauer aufweist (608) und die erwartete Kapazitätsänderungsquantität eine erwartete Zeitdauer für die spezifizierte Änderung der Kapazität bei einem Laden des wiederaufladbaren Energieelements mit der spezifizierten bestimmten Spannung für die Zeitdauer aufweist (610).

12. Die Vorrichtung gemäß einem der Ansprüche 8, 9, 10 oder 11,
wobei die Energieelement-Lade-Überwachungseinrichtung konfiguriert ist zum Bestimmen zumindest eines Parameters des Ladestroms durch zumindest Messen einer gemessenen Menge eines Netto-Ladestroms, der während der Zeitdauer an das wiederaufladbare Energieelement vorgesehen wird (902),
wobei die Energieelement-Kapazitäts-Überwachungseinrichtung weiter konfiguriert ist zum Bestimmen der Zeitdauer basierend auf einem Bestimmen einer Zeit für das wiederaufladbare Energieelement, eine spezifizierte Änderung der Kapazität zu erreichen (908), und
wobei die gemessene Kapazitätsänderungsquantität die Zeitdauer aufweist (908) und die erwartete Kapazitätsänderungsquantität eine erwartete Zeitdauer für die spezifizierte Änderung der Kapazität bei der gemessenen Menge von Netto-Ladestrom aufweist, der während der Zeitdauer vorgesehen wird (910).

13. Die Vorrichtung gemäß einem der Ansprüche 8, 9, 10, 11, oder 12,
wobei die Energieelement-Lade-Überwachungseinrichtung konfiguriert ist zum Bestimmen zumindest eines Parameters des Ladestroms durch zumindest Messen einer gemessenen Menge eines Netto-Ladestroms, der während der Zeitdauer an das wiederaufladbare Energieelement vorgesehen wird (402),
wobei die Energieelement-Kapazitäts-Überwachungseinrichtung weiter konfiguriert ist zum Bestimmen der Zeitdauer basierend auf einem Bestimmen einer Zeit für das wiederaufladbare Energieelement, eine spezifizierte Änderung der Kapazität zu erreichen (408), und
wobei die gemessene Kapazitätsänderungsquantität die Zeitdauer aufweist (408) und die erwartete Kapazitätsänderungsquantität eine erwartete Zeitdauer für die spezifizierte Änderung der Kapazität bei der gemessenen Menge von Netto-Ladestrom aufweist, der während der Zeitdauer vorgesehen wird (410).

14. Die Vorrichtung gemäß einem der Ansprüche 8, 9, 10, 11, 12 oder 13,
wobei die Energieelement-Lade-Überwachungseinrichtung konfiguriert ist zum Bestimmen zumindest eines Parameters des Ladestroms durch zumindest Messen einer gemessenen Menge eines Netto-Ladestroms, der während der Zeitdauer an das wiederaufladbare Energieelement vorgesehen wird (706),
wobei die Energieelement-Kapazitäts-Überwachungseinrichtung konfiguriert ist zum Schätzen der gemessenen Kapazitätsänderungsquantität durch zumindest Schätzen einer gemessenen Änderung der Kapazität des wiederaufladbaren Energieelements während der Zeitdauer (704), und
wobei die gemessene Kapazitätsänderungsquantität die gemessene Änderung der Kapazität aufweist (708) und die erwartete Kapazitätsänderungsquantität eine erwartete Änderung der Kapazität aufweist, die der spezifizierten Menge von Ladestrom entspricht (708).

15. Ein computerlesbares Medium mit computerausführbaren Anweisungen, die ausgebildet sind, die Vorrichtung zu veranlassen, das Verfahren gemäß einem der Ansprüche 1, 2, 3, 4, 5, 6 oder 7 durchzuführen.

16. Ein Datenträger zum Tragen von Daten, die Anweisungen aufweisen, die durch ein Computerverarbeitungsmittel ausführbar sind, um diese Mittel zu veranlassen, ein Verfahren gemäß einem der Ansprüche 1- 7 auszuführen.

## Revendications

1. Procédé de commande de la charge d'un bloc d'alimentation (300, 400, 500, 600, 700, 800, 900), le procédé comprenant :
la détermination d'au moins un paramètre d'un courant de charge (302, 402, 502, 602, 702, 802, 902), comprenant un courant de charge ou une tension déterminée, fourni à un bloc d'alimentation rechargeable (140), le bloc d'alimentation rechargeable comprenant une pluralité de blocs d'alimentation constitutifs (142, 144), le courant de charge étant fourni pendant un intervalle de temps ;
l'estimation d'une grandeur de variation de capacité mesurée (304, 404, 504, 604, 704, 804, 904) pour le bloc d'alimentation rechargeable pendant l'intervalle de temps ;
la comparaison, après l'intervalle de temps, de la grandeur de variation de capacité mesurée à une grandeur de variation de capacité attendue (306, 408, 506, 608, 708, 806, 908), la grandeur de variation de capacité attendue étant basée sur l'au moins un paramètre ;
la détermination, sur la base d'une différence entre la grandeur de variation de capacité mesurée et la grandeur de variation de capacité attendue, du fait qu'au moins un bloc d'alimentation constitutif est devenu défaillant (308, 410, 508, 610, 710, 808, 910), l'au moins un bloc d'alimentation constitutif comprenant moins que la totalité de la pluralité de blocs d'alimentation constitutifs ; et
la modification d'un paramètre de courant de charge en réponse à la détermination du fait que l'au moins un bloc d'alimentation constitutif est devenu défaillant (312, 414, 512, 614, 714, 812, 914).

2. Procédé selon la revendication 1, comprenant en outre :
la fourniture du courant de charge au bloc d'alimentation rechargeable à un niveau de courant déterminé (302, 802), la détermination de l'au moins un paramètre comprenant le réglage du niveau de courant déterminé,
dans lequel l'intervalle de temps est un intervalle de temps fixe (302, 802), et
dans lequel la grandeur de variation de capacité mesurée comprend une variation mesurée de l'une d'une tension chargée et d'une tension déchargée pendant l'intervalle de temps (304, 804) et la grandeur de variation de capacité attendue comprend une variation attendue de l'une de la tension chargée et de la tension déchargée compte tenu de la charge du bloc d'alimentation rechargeable au niveau de courant déterminé pour l'intervalle de temps fixe (306, 806).

3. Procédé selon l'une quelconque des revendications 1 ou 2, comprenant en outre :
la fourniture du courant de charge au bloc d'alimentation rechargeable à une tension déterminée spécifiée (502), dans lequel la détermination d'au moins un paramètre comprend le réglage de la tension déterminée spécifiée,
dans lequel l'intervalle de temps est un intervalle de temps fixe (502), et
dans lequel la grandeur de variation de capacité mesurée comprend une variation mesurée du courant de charge pendant l'intervalle de temps (504) et la grandeur de variation de capacité attendue comprend une variation attendue du courant de charge compte tenu du courant de charge du bloc d'alimentation rechargeable à la tension déterminée spécifiée pour l'intervalle de temps fixe (506).

4. Procédé selon l'une quelconque des revendications 1, 2 ou 3, comprenant en outre :
la fourniture du courant de charge au bloc d'alimentation rechargeable à une tension de charge déterminée (602), dans lequel la détermination d'au moins un paramètre comprend le réglage de la tension de charge déterminée,
dans lequel l'intervalle de temps est déterminé sur la base d'un temps mis par le bloc d'alimentation rechargeable pour atteindre une variation de capacité spécifiée (608), et
dans lequel la grandeur de variation de capacité mesurée comprend l'intervalle de temps (608) et la grandeur de variation de capacité attendue comprend un intervalle de temps attendu pour la variation de capacité spécifiée compte tenu de la charge du bloc d'alimentation rechargeable à la tension de charge déterminée (610).

5. Procédé selon l'une quelconque des revendications 1, 2, 3 ou 4, comprenant en outre :
la fourniture du courant de charge au bloc d'alimentation rechargeable à un niveau de courant de charge déterminé (902), dans lequel la détermination d'au moins un paramètre comprend le réglage du niveau de courant déterminé,
dans lequel l'intervalle de temps est déterminé sur la base d'un temps mis par le bloc d'alimentation rechargeable pour atteindre une variation de capacité spécifiée (908), et
dans lequel la grandeur de variation de capacité mesurée comprend l'intervalle de temps (908) et la grandeur de variation de capacité attendue comprend un intervalle de temps attendu pour la variation de capacité spécifiée compte tenu de la charge du bloc d'alimentation rechargeable au niveau de courant déterminé (910).

6. Procédé selon l'une quelconque des revendications 1, 2, 3, 4 ou 5,
dans lequel la détermination d'au moins un paramètre du courant de charge comprend la mesure d'une quantité mesurée du courant de charge net fourni pendant l'intervalle de temps au bloc d'alimentation rechargeable (402),
dans lequel l'intervalle de temps est déterminé sur la base d'un temps mis par le bloc d'alimentation rechargeable pour atteindre une variation de capacité spécifiée (408), et
dans lequel la grandeur de variation de capacité mesurée comprend l'intervalle de temps (408) et la grandeur de variation de capacité attendue comprend un intervalle de temps attendu pour la variation de capacité spécifiée compte tenu de la quantité mesurée du courant de charge net fourni pendant l'intervalle de temps (410).

7. Procédé selon l'une quelconque des revendications 1, 2, 3, 4, 5 ou 6,
dans lequel la détermination d'au moins un paramètre du courant de charge comprend la mesure d'une quantité mesurée du courant de charge net fourni au bloc d'alimentation pendant l'intervalle de temps (706),
dans lequel le procédé comprend en outre l'estimation d'une variation de capacité mesurée du bloc d'alimentation rechargeable pendant l'intervalle de temps (704), et
dans lequel la grandeur de variation de capacité mesurée comprend la variation de capacité mesurée (708) et la grandeur de variation de capacité attendue comprend une variation de capacité attendue qui correspond à la quantité spécifiée du courant de charge total (708).

8. Appareil destiné à charger un bloc d'alimentation (100, 200), l'appareil comprenant :
un dispositif (112, 118, 218, 224) de surveillance de la charge du bloc d'alimentation configuré pour déterminer au moins un paramètre d'un courant de charge (302, 402, 502, 602, 702, 802, 902), comprenant un courant de charge ou une tension déterminée, fourni à un bloc d'alimentation rechargeable (140), le bloc d'alimentation rechargeable comprenant une pluralité de blocs d'alimentation constitutifs (142, 144), le courant de charge étant fourni pendant un intervalle de temps ;
un dispositif (112, 118, 218, 224) de surveillance de la capacité du bloc d'alimentation configuré pour estimer une grandeur de variation de capacité mesurée (304, 404, 504, 604, 704, 804, 804, 904) pour le bloc d'alimentation rechargeable pendant l'intervalle de temps ; et
une unité de commande de charge de bloc d'alimentation (116, 216) configurée pour :
comparer, après l'intervalle de temps, la grandeur de variation de capacité mesurée à une grandeur de variation de capacité attendue, la grandeur de variation de capacité attendue (306, 408, 506, 608, 708, 806, 908) étant basée sur l'au moins un paramètre ;
déterminer, sur la base d'une différence entre la grandeur de variation de capacité mesurée et la grandeur de variation de capacité attendue, qu'au moins un bloc d'alimentation constitutif est devenu défaillant (308, 410, 508, 610, 710, 808, 910), l'au moins un bloc d'alimentation constitutif comprenant moins que la totalité de la pluralité de blocs d'alimentation constitutifs ; et
modifier un paramètre de courant de charge en réponse à la détermination du fait que l'au moins un bloc d'alimentation constitutif est devenu défaillant (312, 414, 512, 614, 714, 812, 914).

9. Appareil selon la revendication 8, comprenant en outre :
une source de courant de charge pouvant être commandée (110, 210), reliée par voie de communication à l'unité de commande de charge de bloc d'alimentation, la source de courant de charge pouvant être commandée fournissant un niveau de courant de charge configurable,
dans lequel l'unité de commande de charge de bloc d'alimentation est configurée pour déterminer l'au moins un paramètre, au moins en configurant la source de courant de charge pouvant être commandée afin qu'elle fournisse le courant de charge à un niveau de courant déterminé (302, 802),
dans lequel l'intervalle de temps est un intervalle de temps fixe (302, 802), et
dans lequel le dispositif de surveillance de la capacité du bloc d'alimentation estime la grandeur de variation de capacité mesurée, au moins en estimant une variation mesurée d'une tension chargée et d'une tension déchargée pendant l'intervalle de temps (304, 804), et
dans lequel la grandeur de variation de capacité attendue comprend une variation attendue de la tension chargée et de la tension déchargée compte tenu de la charge du bloc d'alimentation rechargeable au niveau de courant déterminé pendant l'intervalle de temps fixe (306, 806).

10. Appareil selon l'une quelconque des revendications 8 ou 9, comprenant en outre :
une source de tension de charge pouvant être commandée (110, 210), reliée par voie de communication à l'unité de commande de charge de bloc d'alimentation, la source de tension de charge pouvant être commandée fournissant le courant de charge à une tension déterminée configurable,
dans lequel l'unité de commande de charge de bloc d'alimentation est configurée pour déterminer l'au moins un paramètre, au moins en configurant la source de tension de charge pouvant être commandée afin qu'elle fournisse le courant de charge à une tension déterminée spécifiée (502),
dans lequel l'intervalle de temps est un intervalle de temps fixe (502), et
dans lequel la grandeur de variation de capacité mesurée comprend une variation mesurée du courant de charge pendant l'intervalle de temps (504) et la grandeur de variation de capacité attendue comprend une variation attendue du courant de charge compte tenu de la charge du bloc d'alimentation rechargeable à la tension déterminée spécifiée pour l'intervalle de temps fixe (506).

11. Appareil selon l'une quelconque des revendications 8, 9 ou 10, comprenant en outre :
une source de tension de charge pouvant être commandée (110, 210), reliée par voie de communication à l'unité de commande de charge de bloc d'alimentation, la source de tension de charge pouvant être commandée fournissant le courant de charge à une tension déterminée configurable,
dans lequel l'unité de commande de charge de bloc d'alimentation est configurée pour déterminer l'au moins un paramètre, au moins en configurant la source de tension de charge pouvant être commandée afin qu'elle fournisse le courant de charge à une tension déterminée spécifiée (602),
dans lequel le dispositif de surveillance de la capacité du bloc d'alimentation est en outre configuré pour déterminer l'intervalle de temps sur la base de la détermination d'un temps mis par le bloc d'alimentation rechargeable pour atteindre une variation de capacité spécifiée (608), et
dans lequel la grandeur de variation de capacité mesurée comprend l'intervalle de temps (608) et la grandeur de variation de capacité attendue comprend un intervalle de temps attendu pour la variation de capacité spécifiée compte tenu de la charge du bloc d'alimentation rechargeable à la tension déterminée spécifiée pour l'intervalle de temps (610).

12. Appareil selon l'une quelconque des revendications 8, 9, 10 ou 11,
dans lequel le dispositif de surveillance de la charge du bloc d'alimentation est configuré pour au moins déterminer un paramètre du courant de charge, au moins en mesurant une quantité mesurée de courant de charge net fournie pendant l'intervalle de temps au bloc d'alimentation rechargeable (902),
dans lequel le dispositif de surveillance de la capacité du bloc d'alimentation est en outre configuré pour déterminer l'intervalle de temps sur la base de la détermination d'un temps mis par le bloc d'alimentation rechargeable pour atteindre une variation de capacité spécifiée (908), et
dans lequel la grandeur de variation de capacité mesurée comprend l'intervalle de temps (908) et la grandeur de variation de capacité attendue comprend un intervalle de temps attendu pour la variation de capacité spécifiée compte tenu de la quantité mesurée du courant de charge net fourni pendant l'intervalle de temps (910).

13. Appareil selon l'une quelconque des revendications 8, 9, 10, 11 ou 12,
dans lequel le dispositif de surveillance de la charge du bloc d'alimentation est configuré pour au moins déterminer un paramètre du courant de charge, au moins en mesurant une quantité mesurée du courant de charge net fourni au bloc d'alimentation rechargeable pendant l'intervalle de temps (402),
dans lequel le dispositif de surveillance de la charge du bloc d'alimentation est en outre configuré pour déterminer l'intervalle de temps sur la base de la détermination d'un temps mis par le bloc d'alimentation rechargeable pour atteindre une variation de capacité spécifiée (408), et
dans lequel la grandeur de variation de capacité mesurée comprend l'intervalle de temps (408) et la grandeur de variation de capacité attendue comprend un intervalle de temps attendu pour la variation de capacité spécifiée compte tenu de la quantité mesurée du courant de charge net fourni pendant l'intervalle de temps (410).

14. Appareil selon l'une quelconque des revendications 8, 9, 10, 11, 12 ou 13,
dans lequel le dispositif de surveillance de la charge du bloc d'alimentation est configuré pour au moins déterminer un paramètre du courant de charge, au moins en mesurant une quantité mesurée du courant de charge net fourni pendant l'intervalle de temps au bloc d'alimentation rechargeable (706),
dans lequel le dispositif de surveillance de la capacité du bloc d'alimentation est configuré pour estimer la grandeur de variation de capacité mesurée, au moins en estimant une variation de capacité mesurée du bloc d'alimentation rechargeable pendant l'intervalle de temps (704), et
dans lequel la grandeur de variation de capacité mesurée comprend la variation de capacité mesurée (708) et la grandeur de variation de capacité attendue comprend une variation de capacité attendue qui correspond à la quantité spécifiée du courant de charge (708).

15. Support lisible par ordinateur contenant des instructions exécutables par ordinateur aptes à faire en sorte que le dispositif mette en oeuvre le procédé selon l'une quelconque des revendications 1, 2, 3, 4, 5, 6 ou 7.

16. Support de données portant des données comprenant des instructions exécutables par des moyens de traitement informatiques pour faire en sorte que ces moyens mettent en oeuvre un procédé selon l'une quelconque des revendications 1-7.
